# EUROPEAN PATENT SPECIFICATION

(11) **EP 4 050 411 B1**
(45) Date of publication and mention of the grant of the patent: **24.06.2026**
(21) Application number: 22159564.8
(22) Date of filing: 01.06.2016
(51) Int. Cl.: G02F 1/167, G09G 3/34, G09G 3/20

(54) **COLOR DISPLAY DEVICE AND DRIVING METHODS THEREFOR**
FARBANZEIGEVORRICHTUNG UND ANSTEUERUNGSVERFAHREN DAFÜR
DISPOSITIF D'AFFICHAGE EN COULEUR ET PROCÉDÉS DE COMMANDE CORRESPONDANTS

(30) Priority: 01.06.2015 US 201562169300 P; 14.10.2015 US 201562241633 P
(43) Date of publication of application: 31.08.2022
(62) Divisional of application: 16804285.1
(73) Proprietor: E Ink Corporation, Billerica, MA 01821 (US)
(72) Inventor: LIN, Craig, Fremont, California, 94555 (US)
(74) Representative: Kilburn & Strode LLP

(56) References cited:
- JP-A- 2009 244 635
- US-A1- 2008 062 159
- US-A1- 2012 154 899
- US-A1- 2014 340 735

## Description

**[Para 1]** This invention relates to color display devices in which each pixel can display at least five, and in some cases at least six, high quality color states, and to methods for driving such color display devices.

**[Para 2]** In order to achieve a color display, color filters are often used. The most common approach is to add color filters on top of black/white sub-pixels of a pixelated display to display red, green and blue colors. When a red color is desired, the green and blue sub-pixels are turned to the black state so that the only color displayed is red. When a blue color is desired, the green and red sub-pixels are turned to the black state so that the only color displayed is blue. When a green color is desired, the red and blue sub-pixels are turned to the black state so that the only color displayed is green. When the black state is desired, all three-sub-pixels are turned to the black state. When the white state is desired, the three sub-pixels are turned to red, green and blue, respectively, and as a result, a white state is seen by the viewer.

**[Para 3]** The biggest disadvantage of using such a technique for a reflective display is that since each of the sub-pixels has a reflectance of about one third of the desired white state, the white state is fairly dim. To compensate for this, a fourth sub-pixel may be added which can display only the black and white states, so that the white level is doubled at the expense of the red, green or blue color level (where each sub-pixel is only one fourth of the area of the pixel). Brighter colors can be achieved by adding light from the white pixel, but this is achieved at the expense of color gamut to cause the colors to be very light and unsaturated. A similar result can be achieved by reducing the color saturation of the three sub-pixels. Even with this approach, the white level is normally substantially less than half of that of a black and white display, rendering it an unacceptable choice for display devices, such as e-readers or displays that need well readable black-white brightness and contrast.

**[Para 4]** In view of these disadvantages of color filter based displays, efforts have been made to develop color displays in which three or more colors can be displayed at each pixel. See, in addition to the aforementioned US 2015/0234250 and US 2016/0011484, United States Patent No. 8,717,664, US 2015/0103394, US 2015/0097877, United States Patent No. 9,170,468, US 2015/0198858, US 2016/0140909 and US 2014/0340430. For convenience, such displays may hereinafter be referred to as "multi-color pixel" of "MCP" displays; when it is desired to specify how many colors are displayed at each pixel, reference may be made to "5-CP" and "6-CP" displays.

**[Para 5]** US 2008/062159 describes an electrophoretic display and a method for driving thereof. Some embodiments provide an electrophoretic display comprising: (a) a first electrode; (b) a second electrode; (c) an electrophoretic member between the first and second electrodes, the electrophoretic member comprising: first particles each of which carries a first charge, second particles each of which carries a second charge, and third particles each of which carries a third charge, the first, second and third charges being different from each other; and a dispersion medium for distributing the first, second and third particles. The electrophoretic display comprises circuitry for applying at least six different driving voltages between the first and second electrodes for selectively moving the first, second and third particles relative to at least the first electrode to display different colors. In some embodiments, the first, second and third particles are white. In some embodiments, the electrophoretic member further comprises fifth particles, sixth particles, and seventh particles, the fifth, sixth and seventh particles being black, each fifth particle carrying a fifth charge, each sixth particle carrying a sixth charge, each seventh particle carrying a seventh charge, wherein the fifth, sixth and seventh charges are respectively equal in magnitude but opposite in polarity to the first, second, and third charges

**[Para 6]** JP 2009 244635 discloses a particle movement type display device, comprising a space between substrates facing each other filled with a display medium including, in a solvent, two or more kinds of first-polarity charged particles which are charged with a first polarity and are different in color and have different moving speeds at the time of the application of a voltage and second-polarity charged particles which are charged with a second polarity opposite to the first polarity and are different in color from the first-polarity charged particles.

**[Para** 7] Accordingly, this invention provides a display layer having a first, viewing surface and a second surface on the opposed side of the display layer from the first surface, the display layer further comprising an electrophoretic medium comprising a fluid and first, second, third, fourth and fifth types of particles dispersed in the fluid, the first, second, third, fourth and fifth types of particles having respectively first, second, third, fourth and fifth optical characteristics differing from one another, the first, third and fourth types of particles having charges of one polarity and the second and fifth types of particles having charges of the opposite polarity, the first type of particles having a greater zeta potential or electrophoretic mobility than the third type of particles, the third type of particles having a greater zeta potential or electrophoretic mobility than the fourth type of particles, and the second type of particles having a greater zeta potential or electrophoretic mobility than the fifth type of particles.

**[Para 8]** The display layer of the present invention comprises a sixth type of particles having a sixth optical characteristic differing from the first, second, third, fourth and fifth optical characteristics, the sixth type of particles bearing a charge of the same polarity as the second and fifth particles but having a zeta potential or electrophoretic mobility intermediate those of the second and the fifth types of particles.

**[Para 9]** This invention also provides a method of driving a display layer having a first, viewing surface and a second surface on the opposed side of the display layer from the first surface, the display layer being provided with means for applying an electric field between the first and second surfaces, the display layer further comprising an electrophoretic medium comprising a fluid and first, second, third, fourth and fifth types of particles dispersed in the fluid, the first, second, third, fourth and fifth types of particles having respectively first, second, third, fourth and fifth optical characteristics differing from one another, the first, third and fourth type of particles having charges of one polarity and the second and fifth types of particles having charges of the opposite polarity, the method comprising, in any order:
(i) applying a first electric field having a high magnitude and a polarity driving the first type of particles towards the viewing surface, thereby causing the display layer to display the first optical characteristic at the viewing surface;
(ii) applying a second electric field having a high magnitude and a polarity driving the second type of particles towards the viewing surface, thereby causing the display layer to display the second optical characteristic at the viewing surface;
(iii) when the second optical characteristic is displayed at the viewing surface, applying a third electric field having a low magnitude and a polarity driving the fourth type of particles towards the viewing surface, thereby causing the display layer to display the fourth optical characteristic at the viewing surface;
(iv) when the first optical characteristic is displayed at the viewing surface, applying a fourth electric field having a low magnitude and a polarity driving the fifth type of particles towards the viewing surface, thereby causing the display layer to display the fifth optical characteristic at the viewing surface; and
(v) when the fifth optical characteristic is displayed at the viewing surface applying a fifth electric field having a magnitude intermediate the first and third electric fields and a polarity driving the third type of particles towards the viewing surface, thereby causing the display layer to display the third optical characteristic at the viewing surface.

**[Para 10]** In this method, the electrophoretic layer further comprises a sixth type of particles having a sixth optical characteristic differing from the first, second, third, fourth and fifth optical characteristics, the sixth type of particles bearing a charge of the same polarity as the second and fifth particles, and the method may further comprise:
(vi) when the fourth optical characteristic is displayed at the viewing surface applying a sixth electric field having a magnitude intermediate the second and fourth electric fields and a polarity driving the sixth type of particles towards the viewing surface, thereby causing the display layer to display the sixth optical characteristic at the viewing surface.

**[Para 11]** In either the five or six particle method of the present invention, step (iii) may be effected by first applying a high electric field having a polarity which drives the fourth particles towards the second surface and thereafter applying the third electric field. A shaking waveform may be applied prior to application of the high electric field, and the high electric field may be applied for a second period prior to the shaking waveform. The application of the high electric field and the application of the third electric field may repeated at least twice, at least four times or at least eight times. Following the application of the third electric field, no electric field may be applied for a period. Alternatively or in addition, no electric field may be applied for a period between the application of the high electric field and the application of the third electric field.

**[Para 12]** In either the five or six particle method of the present invention, step (iv) may be effected by first applying a high electric field having a polarity which drives the fifth particles towards the second surface and thereafter applying the fourth electric field. A shaking waveform may be applied prior to application of the high electric field, and the high electric field may be applied for a second period prior to the shaking waveform. The application of the high electric field and the application of the fourth electric field may be repeated at least twice, at least four times or at least eight times. Following the application of the fourth electric field, no electric field may be applied for a period. Alternatively or in addition, no electric field may be applied for a period between the application of the high electric field and the application of the fourth electric field.

**[Para 13]** In either the five or six particle method of the present invention, step (v) may be effected by first applying a low electric field having a magnitude less than that of the fifth electric field and a polarity which drives the third particles towards the second surface, and thereafter applying the fifth electric field. A high electric field having a magnitude greater than that of, but the same polarity as, the fifth electric field may be applied prior to application of the low electric field. A shaking waveform may be applied prior to the high electric field. The high electric field may be applied for a second period prior to the shaking waveform. Alternatively, in either the five or six particle method of the present invention, step (v) may be effected by first applying a low electric field having a magnitude less than that of the fifth electric field and a polarity which drives the third particles towards the second surface and thereafter applying multiple periods of the fifth electric field alternating with periods of zero electric field. A high electric field having a magnitude greater than that of, but the same polarity as, the fifth electric field may be applied prior to application of the low electric field. A shaking waveform may be applied prior to the high electric field. The high electric field may be applied for a second period prior to the shaking waveform.

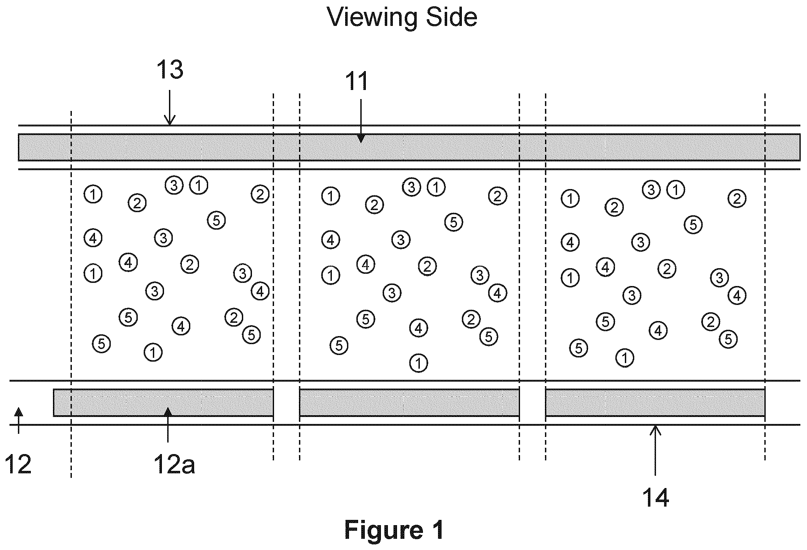

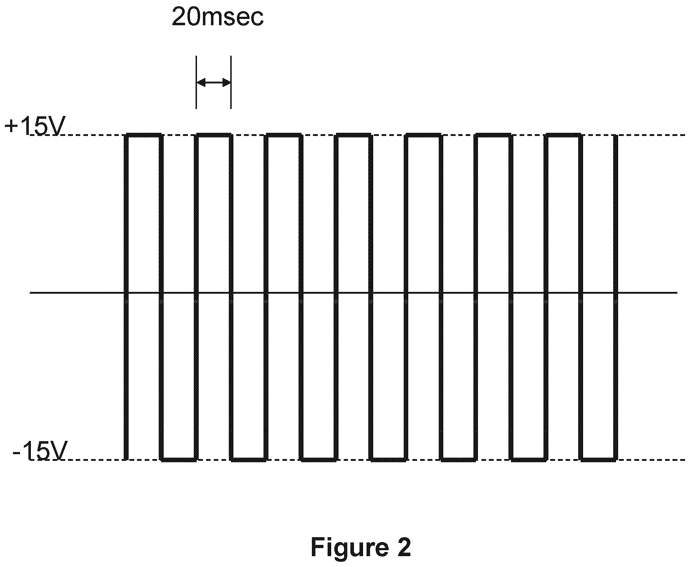

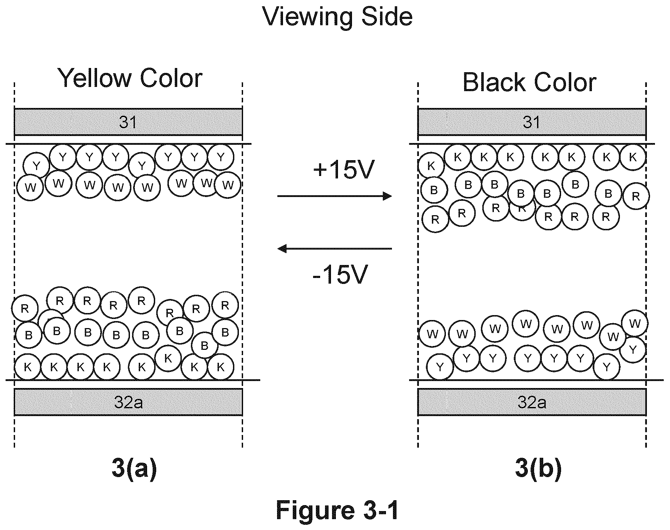

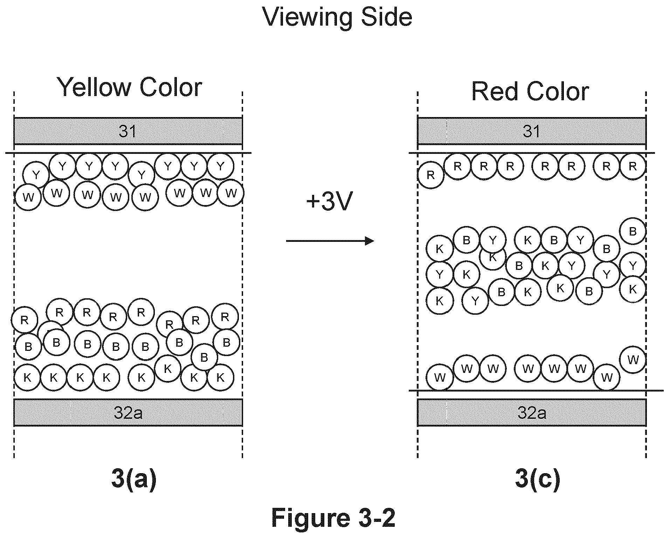

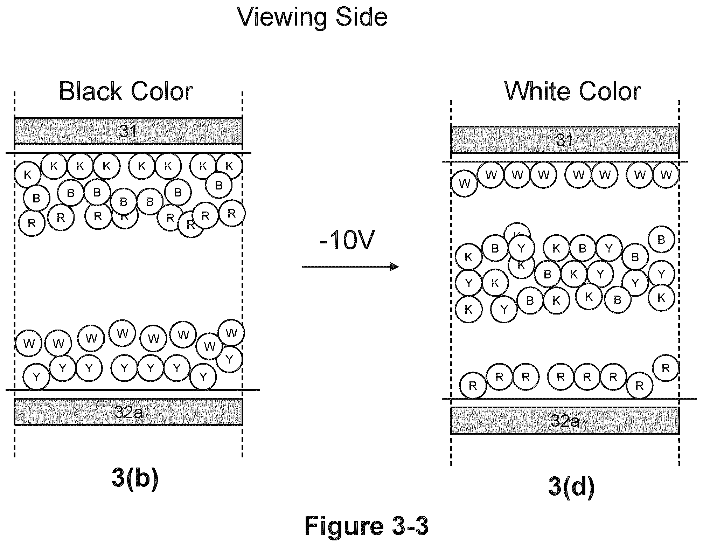

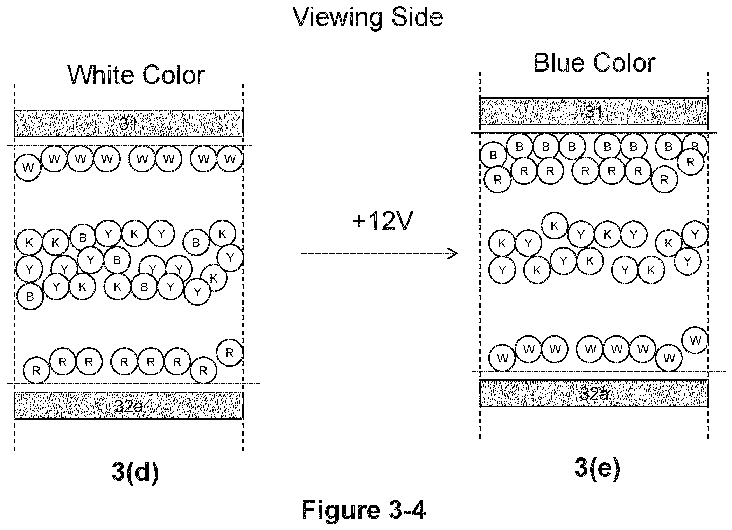

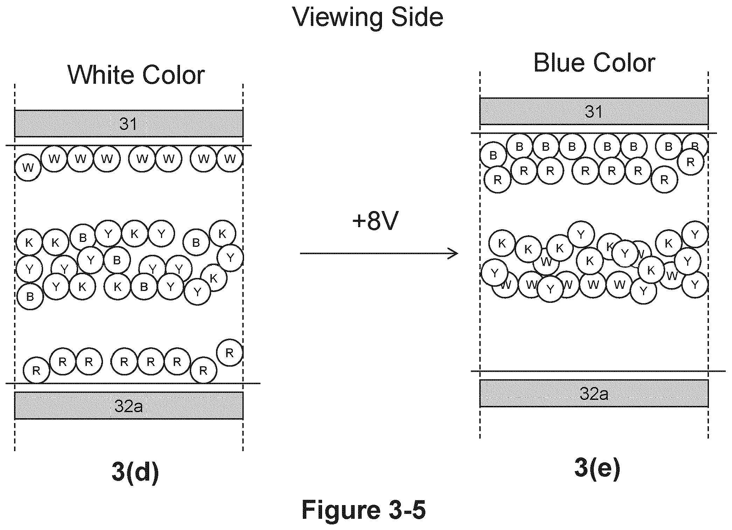

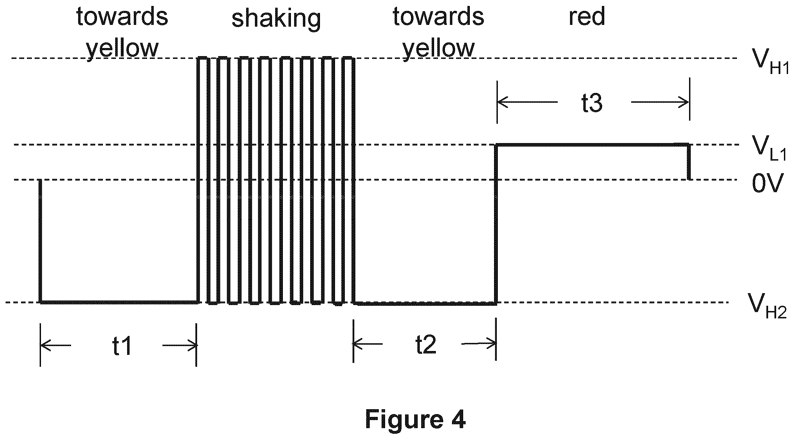

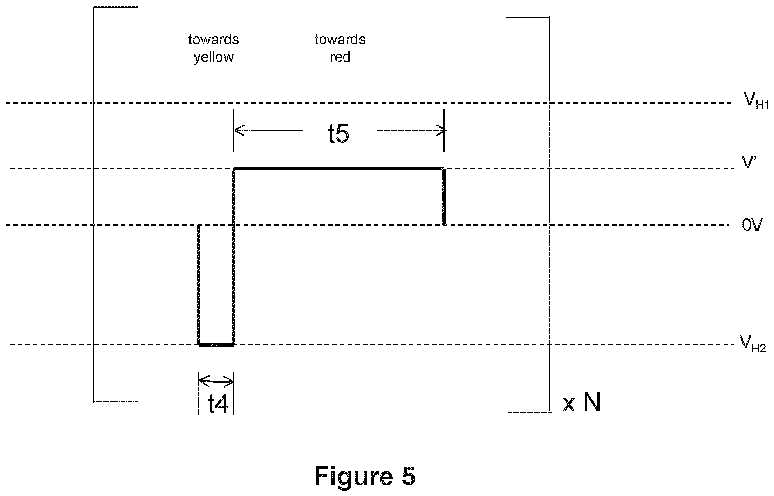

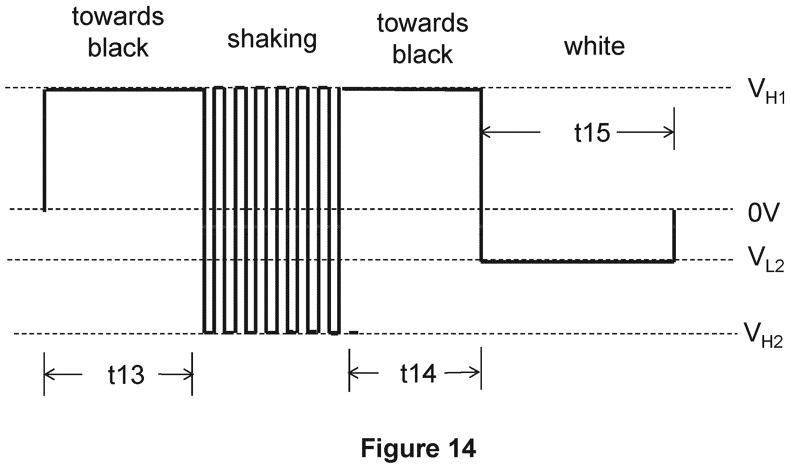

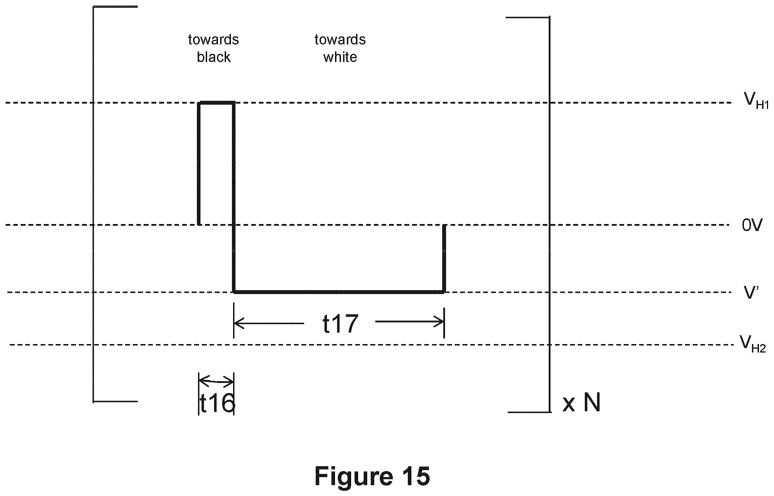

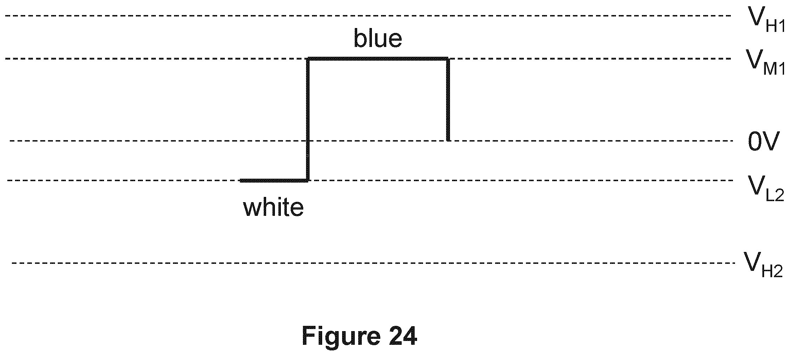

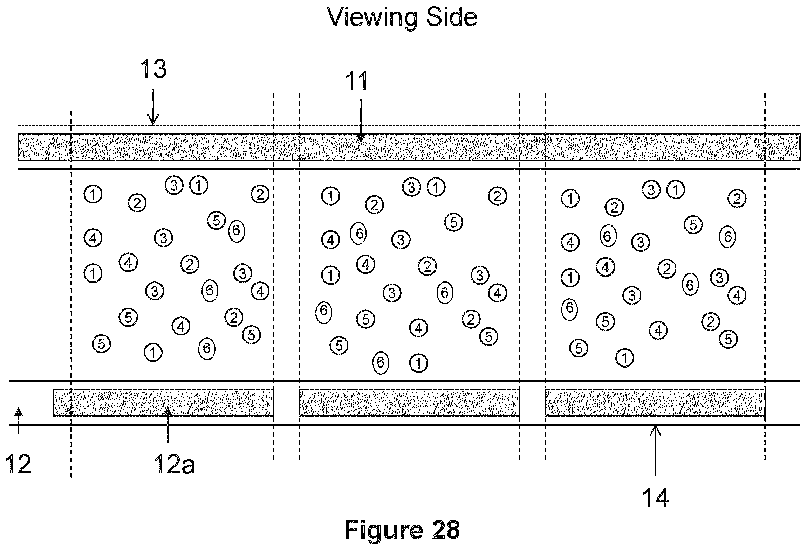

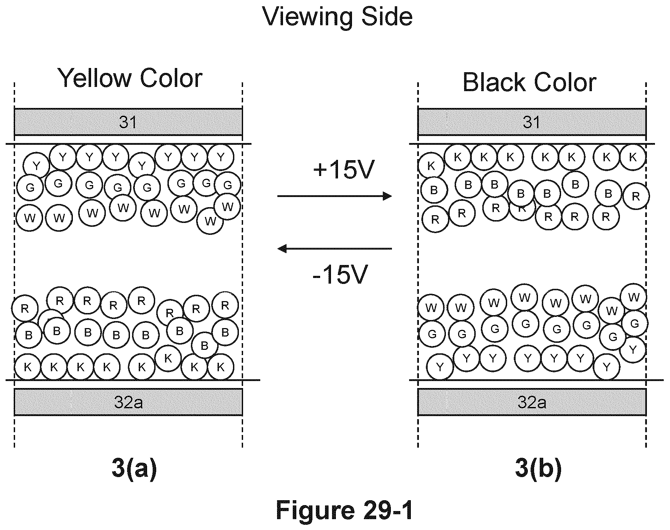

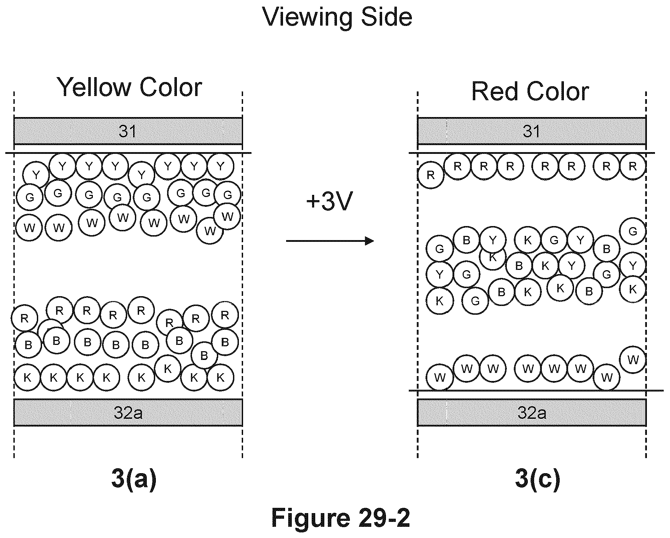

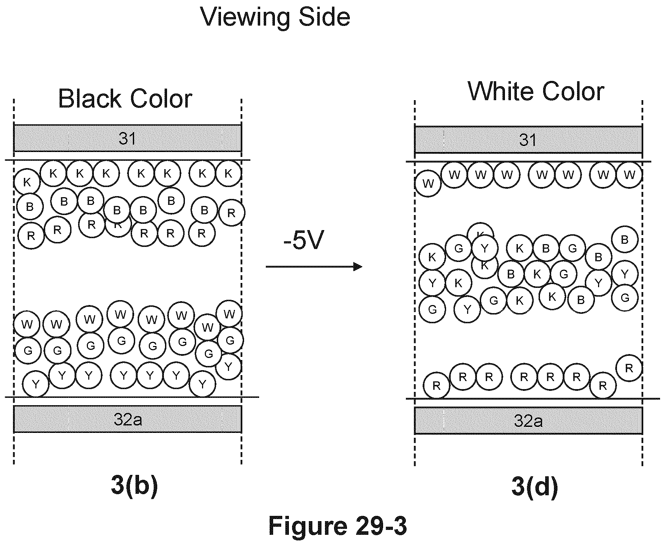

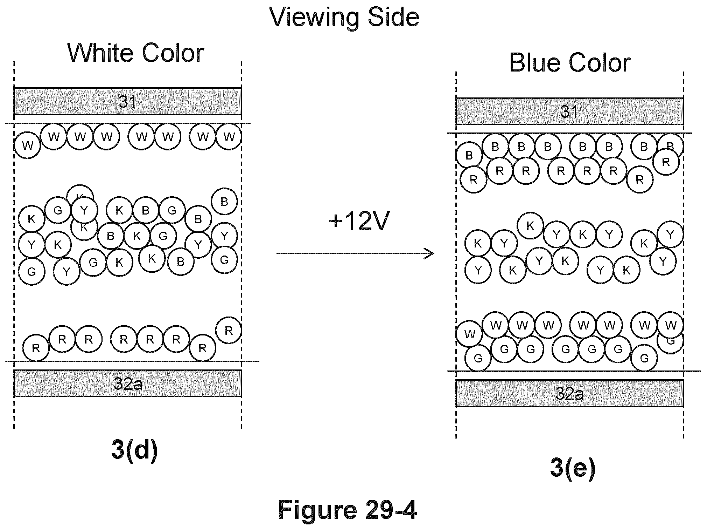

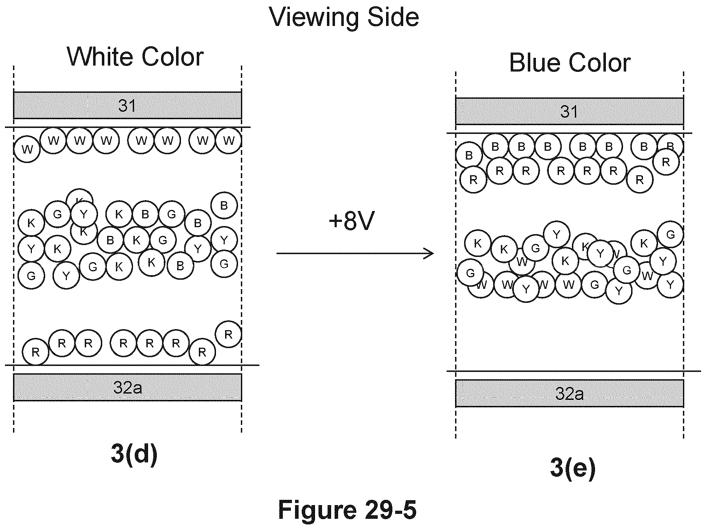

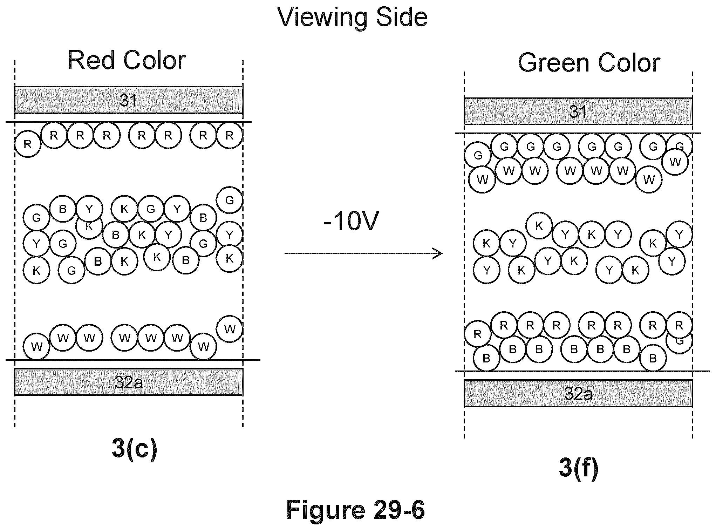

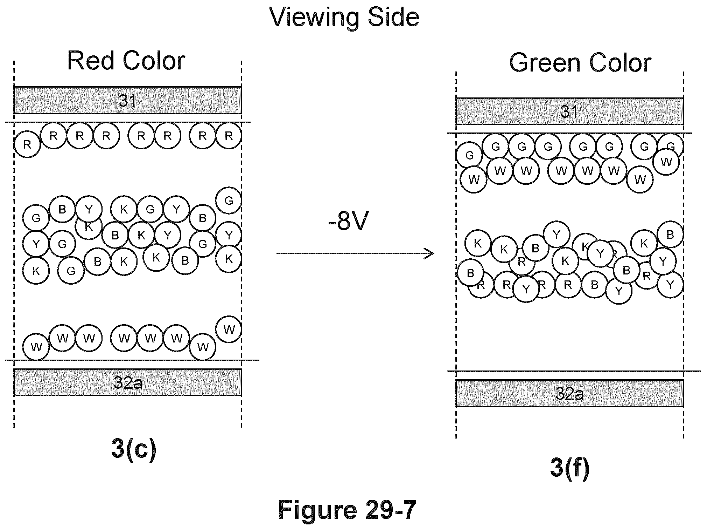

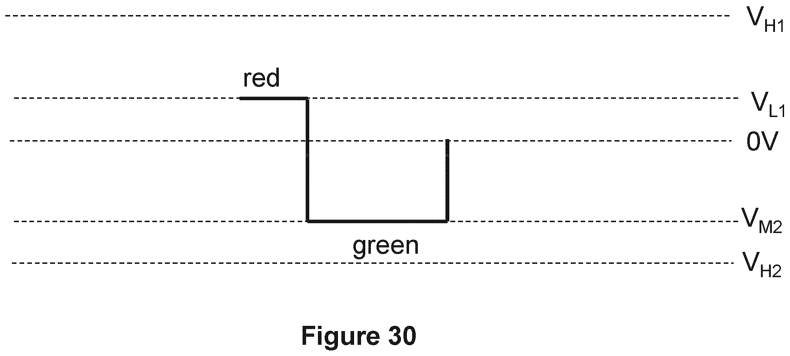

**[Para 14]** In a six particle method of the present invention, step (vi) may effected by first applying a low electric field having a magnitude less than that of the sixth electric field and a polarity which drives the sixth particles towards the second surface and thereafter applying the sixth electric field. A high electric field having a magnitude greater than that of, but the same polarity as, the sixth electric field may be applied prior to application of the low electric field. A shaking waveform may applied prior to the high electric field. The high electric field may be applied for a second period prior to the shaking waveform. Alternatively, in a six particle method of the present invention, step (vi) may effected by first applying a low electric field having a magnitude less than that of the sixth electric field and a polarity which drives the sixth particles towards the second surface and thereafter applying multiple periods of the sixth electric field alternating with periods of zero electric field. A high electric field having a magnitude greater than that of, but the same polarity as, the sixth electric field may be applied prior to application of the low electric field. A shaking waveform may be applied prior to the high electric field. The high electric field may be applied for a second period prior to the shaking waveform.
**[Para 15]** Figure 1 is a schematic cross-section through a display layer containing five different types of particles which can display five different color states.
**[Para 16]** Figure 2 shows a shaking waveform which may be used in the driving methods of the present invention.
**[Para 17]** Figures 3-1 to 3-5 are schematic cross-sections similar to those of Figure 1 but illustrating changes in particle positions effected during various steps of driving methods of the present invention.
**[Para 18]** Figure 4 illustrates a waveform which can used to cause the display layer shown in Figure 1 to effect the transition shown in Figure 3-2 to display the red color of low charged positive particles.
**[Para 19]** Figures 5-7, 8-10 and 11-13 illustrate alternative waveforms which may be used in place of part of the waveform shown in Figure 4.
**[Para 20]** Figure 14 illustrates a waveform which can used to cause the display layer shown in Figure 1 to effect the transition shown in Figure 3-3 to display the white color of low charged negative particles.
**[Para 21]** Figures 15-17, 18-20 and 21-23 illustrate alternative waveforms which may be used in place of part of the waveform shown in Figure 14.
**[Para 22]** Figures 24-27 illustrate waveforms which can be used to cause the display layer shown in Figure 1 to effect the transitions shown in Figure 3-4 or 3-5 to display the blue color of the medium positive particles.
**[Para 23]** Figure 28 is a schematic cross-section similar to that of Figure 1, but taken through a display layer containing six different types of particles which can display six different color states.
**[Para 24]** Figures 29-1 to 29-7 are schematic cross-sections similar to those of Figures 3-1 to 3-5 but illustrating changes in particle positions in the display layer of Figure 28 effected during various steps of driving methods of the present invention.
**[Para 25]** Figures 30-33 illustrate waveforms which can be used to cause the display layer shown in Figure 28 to effect the transitions shown in Figure 29-6 or 29-7 to display the green color of the medium negative particles.

**[Para 26]** The driving methods of the present invention are suitable for driving an electrophoretic display utilizing a display fluid which comprises five, or in some cases six, types of particles dispersed in a fluid, which is typically a dielectric solvent or solvent mixture. The particles are referred to as a first type of particles, a second type of particles, a third type of particles, a fourth type of particles and a fifth type of particles, and a sixth type of particles (when present). The various types of particles have different optical characteristics. These optical characteristics are typically colors perceptible to the human eye, but may be other optical properties, such as optical transmission, reflectance, luminescence or, in the case of displays intended for machine reading, pseudo-color in the sense of a change in reflectance of electromagnetic wavelengths outside the visible range. The invention broadly encompasses particles of any colors as long as the multiple types of particles are visually distinguishable. As an example, the particles may be any combinations of white particles (W), black particles (K), red particles (R), green particles (G), blue particles (B), cyan particles (C), magenta particles (M) and yellow particles (Y).

**[Para** 27] In addition, the various types of particles have different levels of charge potential. For example, five types of particles may be high positive particles, middle positive particles, low positive particles, high negative particles and low negative particles, or alternatively, high negative particles, middle negative particles, low negative particles, high positive particles and low positive particles. When six types of particles are present, they may be high positive particles, middle positive particles, low positive particles, high negative particles, middle negative particles and low negative particles. The term "charge potential", in the context of the present application, may be used interchangeably with "zeta potential" or with electrophoretic mobility. The charge polarities and levels of charge potential of the particles may be varied by the method described in U.S. Patent Application Publication No. 2014/0011913.

**[Para 28]** The magnitudes of the charges on, zeta potentials or electrophoretic mobilities on the "high positive" particles and the "high negative" particles may be the same or different. Likewise, the magnitudes of these parameters on the "middle positive" and the "middle negative" particles may be the same or different, and the magnitudes of these parameters on the "low positive" particles and the "low negative" particles may be the same or different.

**[Para 29]** As already mentioned, the charge potentials of the particles may be measured in terms of zeta potential. In one embodiment, the zeta potential is determined by Colloidal Dynamics AcoustoSizer IIM with a CSPU-100 signal processing unit, ESA EN# Attn flow through cell (K: 127). The instrument constants, such as density of the solvent used in the sample, dielectric constant of the solvent, speed of sound in the solvent, viscosity of the solvent, all of which at the testing temperature (25°C) are entered before testing. Pigment samples are dispersed in the solvent (which is usually a hydrocarbon fluid having less than 12 carbon atoms), and diluted to be 5-10% by weight. The sample also contains a charge control agent (Solsperse 17000, available from Lubrizol Corporation, a Berkshire Hathaway company; "Solsperse" is a Registered Trade Mark), with a weight ratio of 1:10 of the charge control agent to the particles. The mass of the diluted sample is determined and the sample is then loaded into the flow through cell for determination of the zeta potential. Methods and apparatus for the measurement of electrophoretic mobility are well known to those skilled in the technology of electrophoretic displays.

**[Para 30]** The dielectric fluid in which the particles are typically dispersed is clear and colorless. It preferably has a dielectric constant in the range of about 2 to about 30, more preferably about 2 to about 15 for high particle mobility. Examples of suitable dielectric fluids include hydrocarbons such as isoparaffin, decahydronaphthalene (DECALIN), 5-ethylidene-2-norbornene, fatty oils, paraffin oil, silicon fluids, aromatic hydrocarbons such as toluene, xylene, phenylxylylethane, dodecylbenzene or alkylnaphthalene, halogenated solvents such as perfluorodecalin, perfluorotoluene, perfluoroxylene, dichlorobenzotrifluoride, 3,4,5-trichlorobenzotrifluoride, chloropentafluorobenzene, dichlorononane or pentachlorobenzene, and perfluorinated solvents such as FC-43, FC-70 or FC-5060 from 3M Company, St. Paul MN, low molecular weight halogen containing polymers such as poly(perfluoropropylene oxide) from TCI America, Portland, Oregon, poly(chlorotrifluoroethylene) such as Halocarbon Oils from Halocarbon Product Corp., River Edge, NJ, perfluoropolyalkylether such as Galden from Ausimont or Krytox Oils and Greases K-Fluid Series from DuPont, Delaware, polydimethylsiloxane based silicone oil from Dow-corning (DC -200).

**[Para 31]** The particles are preferably opaque, in the sense that they should be light reflecting not light transmissive. It be apparent to those skilled in color science that if the particles were light transmissive, some of the color states appearing in the following description of specific embodiments of the invention would be severely distorted or not obtained. White particles are of course light scattering rather than reflective but care should be taken to ensure that not too much light passes through a layer of white particles. For example, if in the white state shown in Figure 3-3 discussed below, the layer of white particles allowed a substantial amount of light to pass through it and be reflected from the particles behind it, the brightness of the white state could be substantially reduced. The particles used may be primary particles without a polymer shell. Alternatively, each particle may comprise an insoluble core with a polymer shell. The core could be either an organic or inorganic pigment, and it may be a single core particle or an aggregate of multiple core particles. The particles may also be hollow particles.

**[Para 32]** In the case of white particles (W), the primary particles or core particles may be TiO₂, ZrO₂, ZnO, Al₂O₃, Sb₂O₃, BaSO₄, PbSO₄ or the like. For the black particles (K), the primary particles or core particles may be Cl pigment black 26 or 28 or the like (e.g., manganese ferrite black spinel or copper chromite black spinel) or carbon black. For the other colored particles (which are non-white and non-black), the primary particles or core particles may include, but are not limited to, CI pigment PR 254, PR122, PR149, PG36, PG58, PG7, PB15:3, PY83, PY138, PY150, PY155 or PY20. Those are commonly used organic pigments described in color index handbooks, "New Pigment Application Technology" (CMC Publishing Co, Ltd, 1986) and "Printing Ink Technology" (CMC Publishing Co, Ltd, 1984). Specific examples include Clariant Hostaperm Red D3G 70-EDS, Hostaperm Pink E-EDS, PV fast red D3G, Hostaperm red D3G 70, Hostaperm Blue B2G-EDS, Hostaperm Yellow H4G-EDS, F2G-EDS, Novoperm Yellow HR-70-EDS, Hostaperm Green GNX, BASF Irgazine red L 3630, Cinquasia Red L 4100 HD, and Irgazine Red L 3660 HD; Sun Chemical phthalocyanine blue, phthalocyanine green, diarylide yellow or diarylide AAOT yellow. Also, for the other colored particles (non-white and non-black), the primary particles or core particles may also be inorganic pigments, such as red, green, blue and yellow pigments. Examples may include, but are not limited to, CI pigment blue 28 (PB28), CI pigment green 50 and CI pigment yellow 227.

**[Para 33]** The percentages of different types of particles in the fluid may vary. For example, one type of particles may take up 0.1% to 10%, preferably 0.5% to 5%, by volume of the electrophoretic fluid; another type of particles may take up 1% to 50%, preferably 5% to 20%, by volume of the fluid; and each of the remaining types of particles may take up 2% to 20%, preferably 4% to 10%, by volume of the fluid.

**[Para 34]** The various types of particles may have different particle sizes. For example, the smaller particles may have a size which ranges from about 50 nm to about 800 nm. The larger particles may have a size which is about 2 to about 50 times, and more preferably about 2 to about 10 times, the sizes of the smaller particles.

**[Para 35]** Preferred embodiments of the invention will now be described in detail, though by way of illustration only, with reference to the accompanying drawings. Five particle systems of the invention will be described first, and then the modifications needed to incorporate a sixth type of particles will be described.

**[Para 36]** As already mentioned, Figure 1 is a schematic cross-section through a display layer containing five different types of particles which can display five different color states (i.e., a 5-CP display layer). The display layer has a first, viewing surface 13 (the upper surface as illustrated in Figure 1) and a second surface 14 on the opposed side of the display layer from the first surface 13. The term "viewing surface" of course refers to the side of the display on which a user normally views images. The display layer comprises an electrophoretic medium comprising a fluid and first, second, third fourth and fifth types of particles (indicated respectively by numbers 1-5 enclosed in a circle) dispersed in the fluid. The first, second, third, fourth and fifth types of particles having respectively first, second, third, fourth and fifth optical characteristics differing from one another, the first, third and fourth type of particles having charges of one polarity and the second and fifth types of particles having charges of the opposite polarity. More specifically, in the system shown in Figure 1, the first type of particles are black particles (K) carrying a high positive charge and the second type of particles are yellow particles (Y) carrying a high negative charge. The third type of particles are blue (B) particles carrying a middle positive charge and the fourth type of particles are red (R) particles are positively charged; but their magnitudes are progressively less than that of the black particles, which means that the black particles are high-positive particles, the blue particles are mid-positive particles and the red particles are low-positive particles. The fifth type of particles are white (W) particles carrying a low negative charge.

**[Para** 37] The display layer shown in Figure 1 is provided with means for applying electric fields across the display layer, these field applying means having the form of two electrode layers, the first of which is a light-transmissive or transparent common electrode layer 11 extending across the entire viewing surface of the display. The electrode layer 11 may be formed from indium tin oxide (ITO) or a similar light-transmissive conductor. The other electrode layer 12 is a layer of discrete pixel electrodes 12a, which define individual pixel of the display, these pixels being indicated by dotted vertical lines in Figure 1. The pixel electrodes 12a may form part of an active matrix driving system with, for example, a thin film transistor (TFT) backplane, but other types of electrode addressing may be used provided the electrodes provide the necessary electric field across the display layer.

**[Para 38]** Figure 2 is a voltage versus time graph of a shaking waveform may which be used in the driving methods of the present invention. The shaking waveform may consist of repeating a pair of opposite driving pulses for many cycles. For example, the shaking waveform may consist of a +15V pulse for 20 msec and a -15V pulse for 20 msec, with this pair of pulses being repeated 50 times. The total duration of such a shaking waveform would be 2000 msec. For ease of illustration, Figure 2 illustrates only seven pairs of pulses. In practice, there may be at least 10 repetitions (i.e., ten pairs of positive and negative pulses). The shaking waveform may be applied regardless of the optical state prior to a driving voltage is applied. After the shaking waveform is applied, the optical state (at either the viewing surface or the second surface, if visible) will not be a pure color, but will be a mixture of the colors of the five types of pigment particles.

**[Para 39]** Each of the driving pulses in the shaking waveform is applied for not exceeding 50% (or not exceeding 30%, 10% or 5%) of the driving time required for driving from the color state of the high positive particles to the color state of the high negative particles, or *vice versa.* For example, if it takes 300 msec to drive a display device from the color state of the high positive particles to the color state of the high negative particles, or *vice versa,* the shaking waveform may consist of positive and negative pulses, each applied for not more than150 msec. In practice, it is preferred that the pulses be shorter.

**[Para 40]** As already mentioned, the display layer shown in Figure 1 comprises first, black, high positive particles, second, yellow, high negative yellow particles, third, blue, middle positive particles, fourth red, low positive particles, and fifth, white, low negative particles. The manner in which the colors of the various particles can be displayed at the viewing surface will now be described with reference to Figures 3-1 to 3-5.

**[Para 41]** When a high negative driving voltage (V_{H2}, e.g., -15V) is applied to the pixel electrode (3b) (hereinafter, it will be assumed that the common electrode will be maintained at 0V, so in this case the common electrode is strongly positive relative to the pixel electrode) for a time period of sufficient length, an electric field is generated to cause the high negative yellow particles to be driven adjacent the common electrode 31 and the high positive black particles driven adjacent the pixel electrode 32a.

**[Para 42]** The low positive red and middle positive blue particles move slower than the high positive black particles and as a result, the blue particles are above the black particles but below the red particles because the blue particles carry higher charges than the red particles. The black particles are closest to the pixel electrode, as shown in 3(a). The low negative white particles move slower than the high negative yellow particles, and therefore the white particles are below and masked by the yellow particles and therefore not visible at the viewing surface. Thus, a yellow color is displayed at the viewing surface.

**[Para 43]** Conversely, when a high positive driving voltage (V_{H1}, e.g., +15V) is applied to the pixel electrode (3a) (so that the common electrode is strongly negative relative to the pixel electrode) for a time period of sufficient length, an electric field is generated to cause the high positive black particles to be driven adjacent the common electrode 31 and the high negative yellow particles adjacent the pixel electrode 32a. The resulting particle distribution (3(b)) is the exact inverse of that shown in 3(a) and a black color is displayed at the viewing surface.

**[Para 44]** The high driving voltages thus applied may be in the form of single pulses or pulsing waveforms having alternating periods of zero voltage and the driving voltage. The magnitude of the driving voltage used in a pulsing waveform may be or may not be the same as that of the driving voltage used in a single pulse method. There may be, for example, 10-200 cycles of pulsing. A pulsing waveform may lead to better color performance because it can prevent aggregation of the particles with each other, which usually causes reduction of hiding power of the layers of particles.

**[Para 45]** The driving methods used in Figure 3-1 therefore may be summarized as follows:
**[Para 46]** A driving method for an electrophoretic display comprising a first surface on the viewing side, a second surface on the non-viewing side and an electrophoretic fluid which fluid is sandwiched between a common electrode and a layer of pixel electrodes and comprises a first type of particles, a second type of particles, a third type of particles, a fourth type of particles and a fifth type of particles, all of which are dispersed in a solvent or solvent mixture, wherein:
(a) the five types of pigment particles have optical characteristics differing from one another;
(b) the first and second types of particles carry opposite charge polarities;
(c) the third and fourth types of particles carry the same charge polarity as the first type of particles, and the first type, the third type and the fourth type of particles have progressively lower magnitudes; and
(d) the fifth type of particles carries the same charge polarity as the second type of particles but its magnitude is lower than that of the second type of particles,
the method comprising
(i) applying a first driving voltage to a pixel of the electrophoretic display for a first period of time, wherein the first driving voltage has the same polarity as the first type of particles and the first period of time is sufficient to drive the pixel to the color state of the first type of particles to appear at the viewing side, or
(ii) applying a second driving voltage to a pixel of the electrophoretic display for a second period of time, wherein the second driving voltage has the same polarity as the second type of particles and the second period of time is sufficient to drive the pixel to the color state of the second type of particles to appear at the viewing side.

**[Para 47]** Figure 3-2 illustrates the manner in which the low positive (red) particles are displayed at the viewing surface of the display shown in Figure 1. The process starts from the (yellow) state 3(a) shown in Figure 3-1 and repeated on the left side of Figure 3-2. A low positive voltage (V_{L1}, e.g., +3V) is applied to the pixel electrode (i.e., the common electrode is made slightly negative with respect to the pixel electrode) for a time period of sufficient length to cause the high negative yellow particles to move towards the pixel electrode (32a) while the high positive black and middle positive blue particles move towards the common electrode (31). However, when the yellow, black and blue particles meet intermediate the pixel and common electrodes as shown at 3(c), they remain at the intermediate position because the electric field generated by the low driving voltage is not strong enough to overcome the attractive forces between them. As shown, the yellow, black and blue particles stay intermediate the pixel and common electrodes in a mixed state.

**[Para 48]** The term "attractive force" as used herein, encompasses electrostatic interactions, linearly dependent on the particle charge potentials, and the attractive force can be further enhanced by other forces, such as Van der Waals forces, hydrophobic interactions and the like.

**[Para 49]** Obviously, attractive forces also exist between the low positive red particles and the high negative yellow particles, and between the low negative white particles and both the high positive black and middle positive blue particles. However, these attractive forces are not as strong as the attractive forces between the black and yellow particles and between the blue and yellow particles, and thus the weak attractive forces on the red and white particles can be overcome by the electric field generated by the low driving voltage, so that the low charged particles and the high charged particles of opposite polarity can be separated. The electric field generated by the low driving voltage is sufficient to separate the low negative white and low positive red particles, thereby causing the red particles to move adjacent the common electrode (31) viewing surface and the white particles to move adjacent the pixel electrode (32a). As a result, the pixel displays a red color, while the white particles lie closest to the pixel electrode, as shown in 3(c).

**[Para 50]** The driving method of Figure 3-2 can therefore be summarized as follows:
**[Para 51]** A driving method for an electrophoretic display comprising a first surface on the viewing side, a second surface on the non-viewing side and an electrophoretic fluid which fluid is sandwiched between a common electrode and a layer of pixel electrodes and comprises a first type of particles, a second type of particles, a third type of particles, a fourth type of particles and a fifth type of particles, all of which are dispersed in a solvent or solvent mixture, wherein:
(a) the five types of pigment particles have optical characteristics differing from one another;
(b) the first and second types of particles carry opposite charge polarities;
(c) the third and fourth types of particles carry the same charge polarity as the first type of particles, and the first type, the third type and the fourth type of particles have progressively lower magnitudes; and
(d) the fifth type of particles carries the same charge polarity as the second type of particles but its magnitude is lower than that of the second type of particles,
the method comprising:
(i) driving a pixel of the electrophoretic display to the color of the second type of particles; and
(ii) applying a low driving voltage for a period of time, wherein the low driving voltage has the same polarity as the fourth type of particles and the period of time is sufficient to drive the pixel from the color state of the second type of particles to the color state of the fourth type of particles to appear at the viewing side.

**[Para 52]** Figure 3-3 illustrates the manner in which the low negative (white) particles are displayed at the viewing surface of the display shown in Figure 1. The process starts from the (black) state 3(b) shown in Figure 3-1 and repeated on the left side of Figure 3-3. A low negative voltage (V_{L2}, e.g., -10V) is applied to the pixel electrode (i.e., the common electrode is made slightly positive with respect to the pixel electrode) for a time period of sufficient length to cause the high positive black and middle positive blue particles to move towards the pixel electrode (32a) while the high negative yellow particles move towards the common electrode (31). However, when the yellow, black and blue particles meet intermediate the pixel and common electrodes as shown at 3(d), they remain at the intermediate position because the electric field generated by the low driving voltage is not strong enough to overcome the attractive forces between them. Thus, as previously discussed with reference to Figure 3-2, the yellow, black and blue particles stay intermediate the pixel and common electrodes in a mixed state.

**[Para 53]** As discussed above with reference to Figure , attractive forces also exist between the low positive red particles and the high negative yellow particles, and between the low negative white particles and both the high positive black and middle positive blue particles. However, these attractive forces are not as strong as the attractive forces between the black and yellow particles and between the blue and yellow particles, and thus the weak attractive forces on the red and white particles can be overcome by the electric field generated by the low driving voltage, so that the low charged particles and the high charged particles of opposite polarity can be separated. The electric field generated by the low driving voltage is sufficient to separate the low negative white and low positive red particles, thereby causing the white particles to move adjacent the common electrode (31) viewing surface and the red particles to move adjacent the pixel electrode (32a). As a result, the pixel displays a white color, while the red particles lie closest to the pixel electrode, as shown in 3(d).

**[Para 54]** Figures 3-4 and 3-5 illustrate the manner in which the middle positive (blue) particles are displayed at the viewing surface of the display shown in Figure 1. The process starts from the (white) state 3(d) shown in Figure 3-3 and repeated on the left sides of Figures 3-4 and 3-5. In Figure 3-4, a medium positive voltage (V_{M1}, e.g., +12V) is applied to the pixel electrode (i.e., the common electrode is made moderately negative with respect to the pixel electrode). The medium positive driving voltage causes the white particles to move away from the common electrode and the red particles to move away from the pixel electrode, thereby tending to cause all five types of particles to meet and form a "pack" intermediate the common and pixel electrodes. The medium voltage applied is not sufficient to separate the high positive black from the high negative yellow particles in the pack, but (unlike the situation with the low driving voltage used in Figure 3-2) is sufficient to cause the middle positive blue particles to break away from the pack and move towards the common electrode. The low positive red particles also separate from the high negative yellow particles and move towards the common electrode. However, the middle positive blue particles move faster than the low positive red particles and arrive adjacent the common electrode first, so that the pixel displays a blue color at the viewing surface. Similarly, the low negative white particles separate from the high positive black particles and move adjacent the pixel electrode, to produce the state illustrated at 3(e).

**[Para 55]** Figure 3-5 shows an alternative method of effected the same white-to-blue transition as in Figure 3-4. The difference between Figures 3-4 and 3-5 is that in the latter the medium positive driving voltage is reduced from +12 to +8V, with the result that, although the blue and red particles separate from the pack in the same way as in Figure 3-4, the electric field generated by the driving voltage of +8V is not sufficient to separate the low negative white particles from the high positive black particles, so that the black, yellow and white particles remain in a pack intermediate the common and pixel electrodes. A blue color is still displayed at the viewing surface but the pixel electrode surface (if visible) will display the color of a mixture of black, yellow and white particles, rather than the white state displayed at this surface in Figure 3-4. For most practical purposes, this difference is of no consequence.

**[Para 56]** It will readily be apparent to those skilled in imaging science that if "clean", well saturated colors are to be obtained in the various color states illustrated in Figures 3-1 to 3-5, all non-black and non-white particles used in the electrophoretic medium should be light-reflecting rather than light-transmissive. (White particles are inherently light-scattering, while black particles are inherently light-absorbing.) For example, in the blue color state 3(e) shown in Figure 3-4, if the blue particles were substantially light-transmissive, a substantial proportion of the light entering the electrophoretic layer through the viewing surface would pass through the blue particles and a proportion of this transmitted would be reflected back from the red particles immediately "behind" (i.e., immediately below as illustrated in Figure 3-4) the blue particles. Assuming the red particles were also significantly light-transmissive, a further proportion of the light transmitted through blue particles would be reflected from the pack of white and yellow particles. The overall effect would be serious "contamination" of the desired blue color with at least red, and possibly also yellow tinges, a highly undesirable. Similar considerations apply, with even more force, to six particle systems of the invention described below with reference to Figures 29-1 to 29-7.

**[Para** 57] Figure 4 illustrates a waveform which may be used to effect the yellow-to-red (high negative to low positive) transition of Figure 3-2. In the waveform of Figure 4, a high negative driving voltage (V_{H2}, for example -15V) is first applied for a period of t1. This initial application of a high negative driving voltage may be omitted but is preferably included to ensure that the entire waveform of Figure 4 is DC balanced. (The term "DC balanced" is used herein to mean that the integral of the driving voltage applied to a pixel with respect to time taken over an entire waveform is substantially zero.) A shaking waveform is then applied, followed by application of the high negative driving voltage (V_{H2}) for a period of t2, thus ensuring that the pixel is in the yellow state shown in Figure 3-2. From this yellow state, the pixel is driven to the red state by applying a low positive driving voltage (V_{L1}, for example +3V) for a period of t3, to effect the yellow-to-red transition shown in Figure 3-2. The period t2 is sufficient to drive the pixel to the yellow state when V_{H2} is applied and the period t3 is sufficient to drive the pixel to the red state from the yellow state when V_{L1} is applied.

**[Para 58]** Figure 5 illustrates a waveform which may be used to replace the portion of the waveform of Figure 4 occurring in period t3. In the first portion of the waveform of Figure 5, the high negative driving voltage (V_{H2}) is applied to a pixel for a period of t4 to drive the pixel towards the yellow state, then a positive driving voltage (+V') is applied for a period of t5 to drive the pixel towards the red state. The magnitude of V' is lower than that of V_{H} (e.g., V_{H1} or V_{H2}). The magnitude of +V' may be less than 50% of the magnitude of V_{H}, and t5 may greater than t4, for example, t4 may be in the range of 20-400 msec and t5 may be ≥ 200 msec. The waveform of Figure 5 is repeated for at least 2 cycles (N≥ 2), preferably at least 4 cycles and more preferably at least 8 cycles. The red color becomes more intense after each driving cycle.

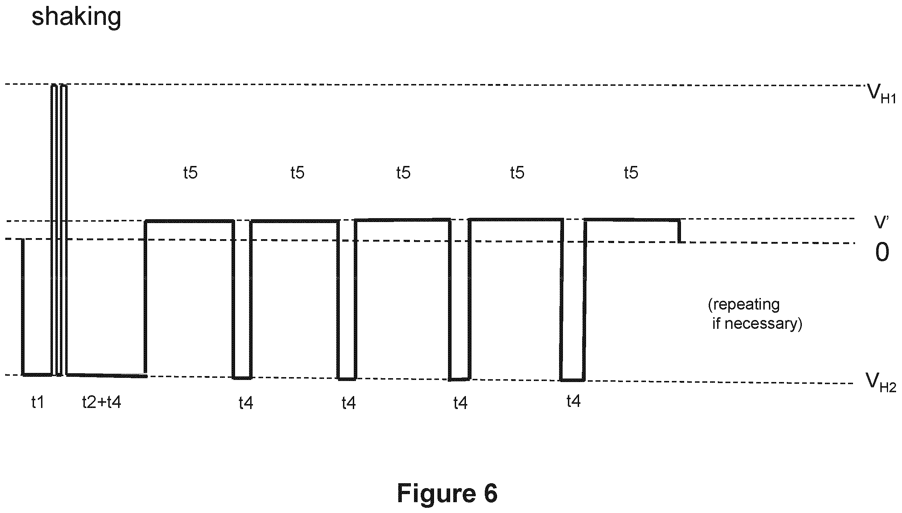

**[Para 59]** As already noted, the waveform of Figure 5 may be used to replace the portion of the waveform of Figure 4 occurring in period t3. Figure 6 illustrates a waveform in which the portion of the waveform of Figure 4 occurring in period t3 is replaced by five cycles of the waveform of Figure 5 (more or fewer cycles may of course be used). In other words, the waveform of Figure 6 comprises driving towards yellow for a period of t1 (cf. Figure 4), a shaking waveform, driving towards yellow for a period of t2 (again, cf. Figure 4), and then applying multiple cycles of the waveform of Figure 5.

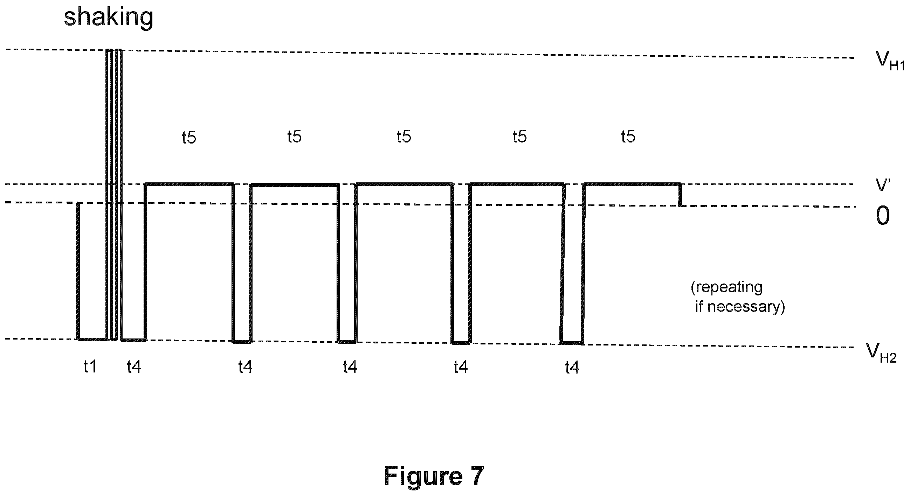

**[Para 60]** Figure 7 illustrates a waveform similar to that of Figure 6 but in which the step of driving towards the yellow state for the period of t2 is eliminated, so that the waveform of Figure 7 transitions from the shaking waveform immediately to the waveform of Figure 5. The waveforms of Figures 6 and 7 may each be DC balanced.

**[Para 61]** The driving method of Figure 5 therefore may be summarized as follows:
**[Para 62]** A driving method for an electrophoretic display comprising a first surface on the viewing side, a second surface on the non-viewing side and an electrophoretic fluid which fluid is sandwiched between a common electrode and a layer of pixel electrodes and comprises a first type of particle s, a second type of particles, a third type of particles, a fourth type of particles and a fifth type of particles, all of which are dispersed in a solvent or solvent mixture, wherein:
(a) the five types of pigment particles have optical characteristics differing from one another;
(b) the first and second types of particles carry opposite charge polarities;
(c) the third and fourth types of particles carry the same charge polarity as the first type of particles, and the first type, the third type and the fourth type of particles have progressively lower magnitudes; and
(d) the fifth type of particles carries the same charge polarity as the second type of particles but its magnitude is lower than that of the second type of particles,
the method comprises the following steps:
(i) applying a first driving voltage to a pixel of the electrophoretic display for a first period of time to drive the pixel towards the color state of the second type of particles;
(ii) applying a second driving voltage to the pixel for a second period of time, wherein the second driving voltage has same polarity as the fourth type of particles and a magnitude lower than that of the first driving voltage, to drive the pixel from the color state of the second type of particles towards the color state of the fourth type of particles to appear at the viewing side; and repeating steps (i) and (ii).

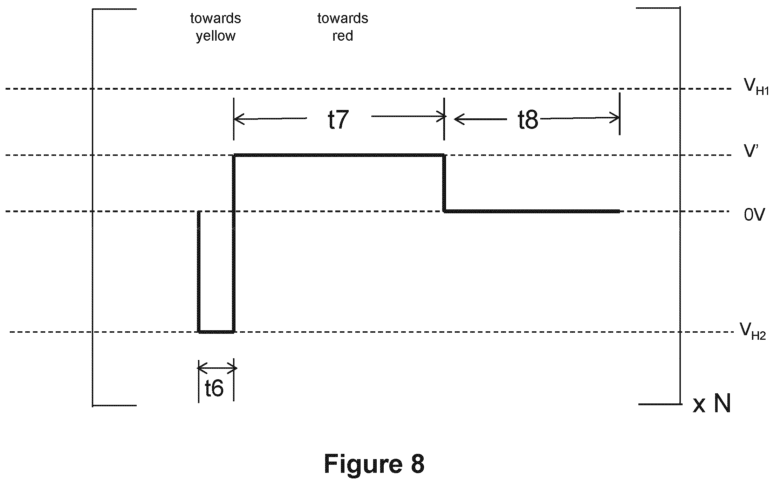

**[Para 63]** In this method, the magnitude of the second driving voltage may be less than 50% of the magnitude of the first driving voltage. Steps (i) and (ii) may be repeated at least 2 times, preferably at least 4 times and more preferably at least 8 times. The method may further comprise a shaking waveform before step (i), and/or may further comprise driving the pixel to the color state of the second type of particles after the shaking waveform but prior to step (i). **[Para 64]** Figure 8 illustrates a waveform which may be used in place of the waveform of Figure 5 to replace the portion of the waveform of Figure 4 occurring in period t3. The waveform of Figure 8 comprises driving towards yellow for an initial period of t6 (cf. period t4 in Figure 5), followed by driving towards red for a period of t7 (cf. period t5 in Figure 5). However, in the waveform of Figure 8, period t7 is followed by a wait period of t8 in which no driving voltage is applied. The waveform of Figure 8 is designed to release the charge imbalance stored in the dielectric layers and/or at the interfaces between layers of different materials, in an electrophoretic display device, especially when the resistance of the dielectric layers is high, for example, at a low temperature. (As used herein, the term "low temperature" refers to a temperature below about 10°C.) The wait time presumably can dissipate the unwanted charge stored in the dielectric layers and cause the short pulse t6 for driving a pixel towards the yellow state and the longer pulse t7 for driving the pixel towards the red state to be more efficient. As a result, this alternative driving method will bring a better separation of the low charged (red) particles from the higher charged ones. The wait period t8 may be in the range of 5-5000 msec, depending on the resistance of the dielectric layers. The entire waveform of Figure 8 may be repeated at least 2 times (N ≥2), preferably at least 4 times and more preferably at least 8 times.

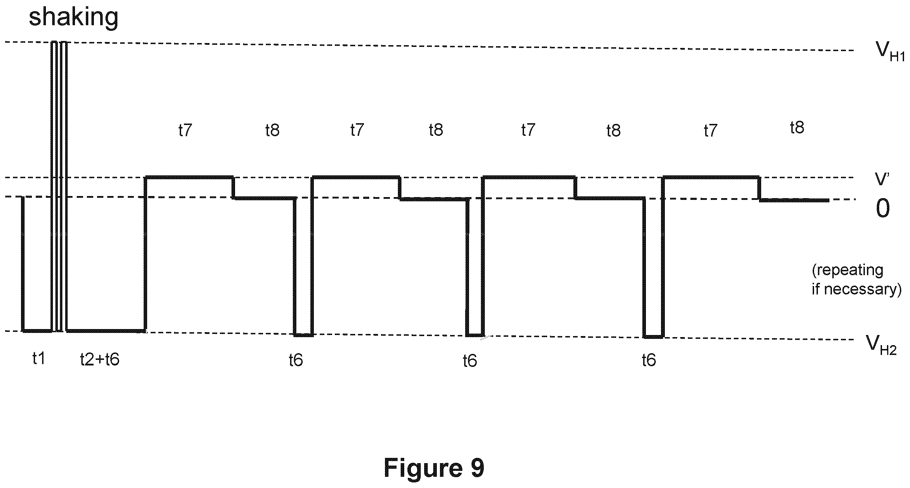

**[Para 65]** As already noted, the waveform of Figure 8 may be used to replace the portion of the waveform of Figure 4 occurring in period t3. Figure 9 illustrates a waveform in which the portion of the waveform of Figure 4 occurring in period t3 is replaced by four cycles of the waveform of Figure 8 (more or fewer cycles may of course be used). In other words, the waveform of Figure 9 comprises driving towards yellow for a period of t1 (cf. Figure 4), a shaking waveform, driving towards yellow for a period of t2 (again, cf. Figure 4), and then applying multiple cycles of the waveform of Figure 8.

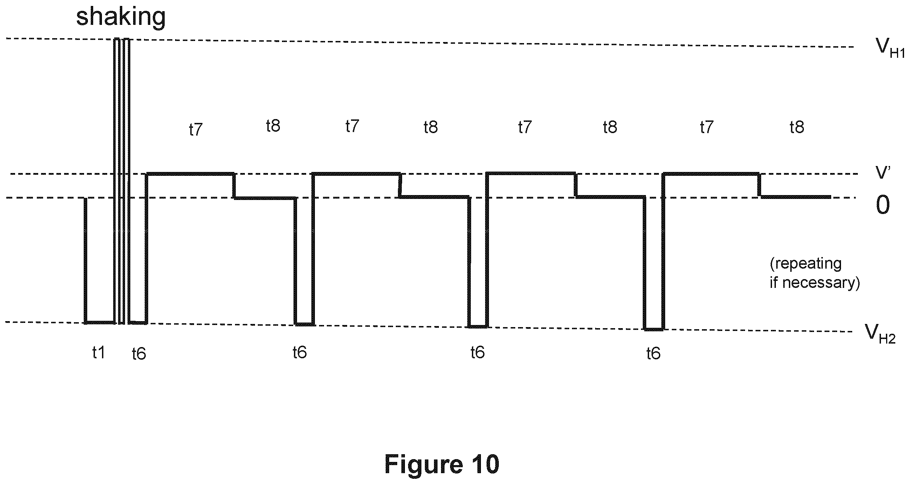

**[Para 66]** Figure 10 illustrates a waveform similar to that of Figure 9 but in which the step of driving towards the yellow state for the period of t2 is eliminated, so that the waveform of Figure 10 transitions from the shaking waveform immediately to the waveform of Figure 8. The waveforms of Figures 9 and 10 may each be DC balanced.

**[Para** 67] The driving method of Figure 8 therefore can be summarized as follows:
**[Para 68]** A driving method for an electrophoretic display comprising a first surface on the viewing side, a second surface on the non-viewing side and an electrophoretic fluid which fluid is sandwiched between a common electrode and a layer of pixel electrodes and comprises a first type of particles, a second type of particles, a third type of particles, a fourth type of particles and a fifth type of particles, all of which are dispersed in a solvent or solvent mixture, wherein:
(a) the five types of pigment particles have optical characteristics differing from one another;
(b) the first and second types of particles carry opposite charge polarities;
(c) the third and fourth types of particles carry the same charge polarity as the first type of particles, and the first type, the third type and the fourth type of particles have progressively lower magnitudes; and
(d) the fifth type of particles carries the same charge polarity as the second type of particles but its magnitude is lower than that of the second type of particles,
the method comprises the following steps:
(i) applying a first driving voltage to a pixel of the electrophoretic display for a first period of time to drive the pixel towards the color state of the second type of particles;
(ii) applying a second driving voltage to the pixel for a second period of time, wherein the second driving voltage has same polarity as the fourth type of particles and a magnitude lower than that of the first driving voltage, to drive the pixel from the color state of the second type of particles towards the color state of the fourth type of particles to appear at the viewing side;
(iii) applying no driving voltage to the pixel for a third period of time; and repeating steps (i)-(iii).

**[Para 69]** In this method, the magnitude of the second driving voltage may be less than 50% of the magnitude of the first driving voltage. Steps (i), (ii) and (iii) may be repeated at least 2 times, preferably at least 4 times and more preferably at least 8 times. The method may further comprise a shaking waveform before step (i), and/or may further comprise driving the pixel to the color state of the second type of particles after the shaking waveform but prior to step (i). The lengths of the driving periods may be temperature dependent.

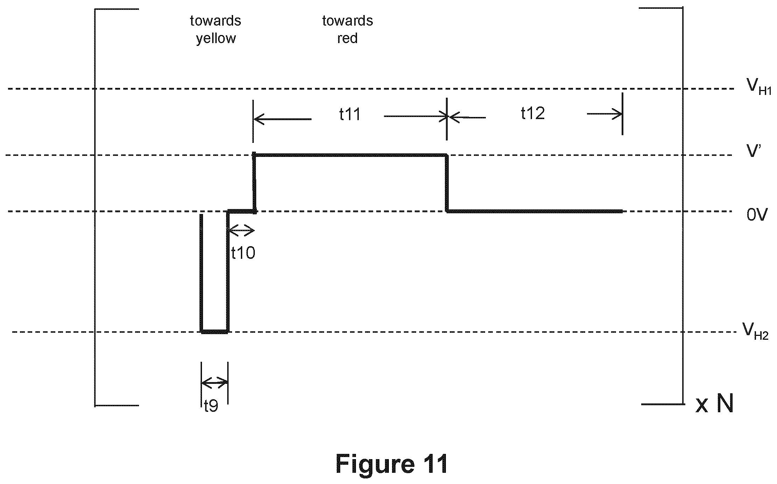

**[Para** 70] Figure 11 illustrates a waveform which may be used in place of the waveform of Figure 5 or 8 to replace the portion of the waveform of Figure 4 occurring in period t3. The waveform of Figure 11 comprises driving towards yellow for an initial period of t9 (cf. period t4 in Figure 5), followed by a wait time of t10 during which no driving voltage is applied. The wait time of t10 is followed by driving towards red for a period of t11 (cf. period t5 in Figure 5), followed by a wait period of t12 in which no driving voltage is applied (cf. period t8 in Figure 8). The waveform of Figure 11 may be repeated at least 2 times, preferably at least 4 times and more preferably at least 8 times.

**[Para** 71] In the waveform of Figure 11, the first wait time t10 is very short while the second wait time t12 is longer. The period t9 is also shorter than the period t11. For example, t9 may be in the range of 20-200 msec; t10 may be less than 100 msec; t11 may be in the range of 100-200 msec; and t12 may be less than 1000 msec.

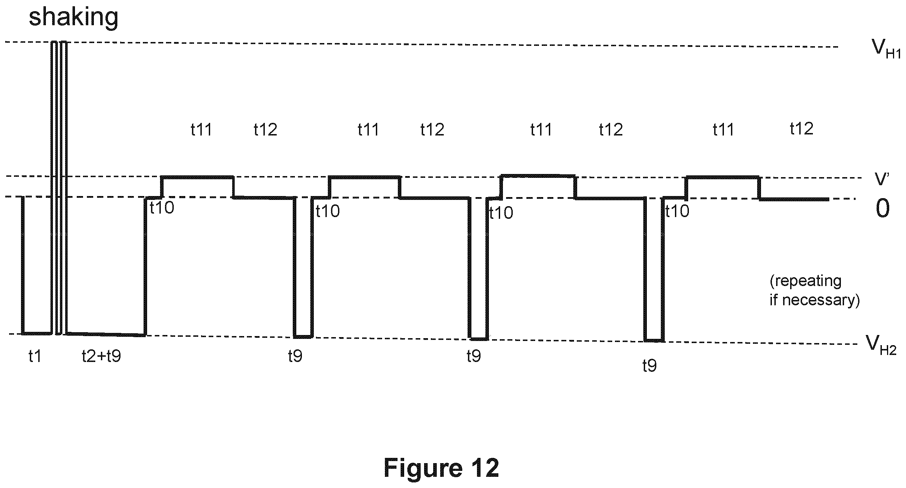

**[Para** 72] As already noted, the waveform of Figure 11 may be used to replace the portion of the waveform of Figure 4 occurring in period t3. Figure 12 illustrates a waveform in which the portion of the waveform of Figure 4 occurring in period t3 is replaced by four cycles of the waveform of Figure 11 (more or fewer cycles may of course be used). In other words, the waveform of Figure 12 comprises driving towards yellow for a period of t1 (cf. Figure 4), a shaking waveform, driving towards yellow for a period of t2 (again, cf. Figure 4), and then applying multiple cycles of the waveform of Figure 11. As a general rule, the better the yellow state achieved at the end of period t2, the better the red state that will be displayed at the end of the waveform.

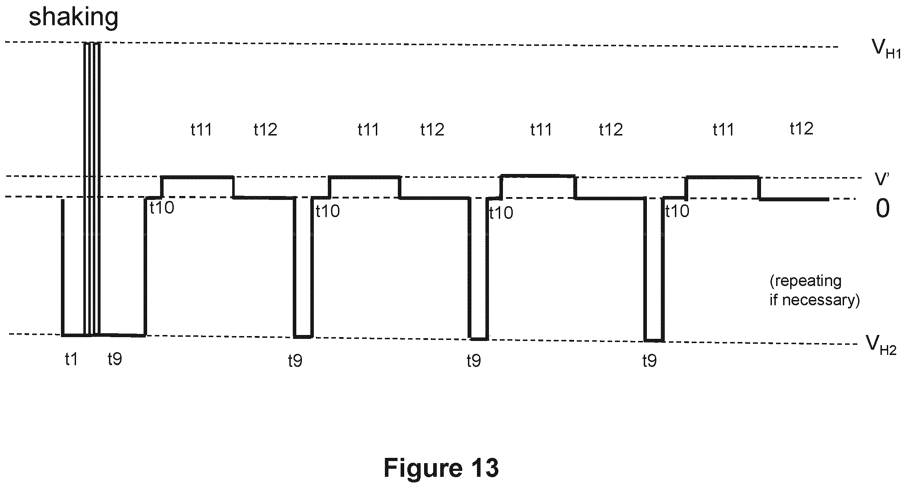

**[Para** 73] Figure 13 illustrates a waveform similar to that of Figure 12 but in which the step of driving towards the yellow state for the period of t2 is eliminated, so that the waveform of Figure 13 transitions from the shaking waveform immediately to the waveform of Figure 11. The waveforms of Figures 12 and 13 may each be DC balanced.

**[Para** 74] The driving method of Figure 11 therefore can be summarized as follows:
**[Para** 75] A driving method for an electrophoretic display comprising a first surface on the viewing side, a second surface on the non-viewing side and an electrophoretic fluid which fluid is sandwiched between a common electrode and a layer of pixel electrodes and comprises a first type of particles, a second type of particles, a third type of particles, a fourth type of particles and a fifth type of particles, all of which are dispersed in a solvent or solvent mixture, wherein:
(a) the five types of pigment particles have optical characteristics differing from one another;
(b) the first and second types of particles carry opposite charge polarities;
(c) the third and fourth types of particles carry the same charge polarity as the first type of particles, and the first type, the third type and the fourth type of particles have progressively lower magnitudes; and
(d) the fifth type of particles carries the same charge polarity as the second type of particles but its magnitude is lower than that of the second type of particles,
the method comprises the following steps:
(i) applying a first driving voltage to a pixel in the electrophoretic display for a first period of time to drive the pixel towards the color state of the second type of particles;
(ii) applying no driving voltage to the pixel for a second period of time;
(iii) applying a second driving voltage to the pixel for a third period of time, wherein the second driving voltage has the same polarity as the fourth type of particles and has a magnitude lower than that of the first driving voltage, to drive the pixel from the color state of the second type of particles towards the color state of the fourth type of particles to appear at the viewing side;
(iv) applying no driving voltage to the pixel for a fourth period of time; and repeating steps (i)-(iv).

**[Para** 76] In this method, the magnitude of the second driving voltage may be less than 50% of the magnitude of the first driving voltage. Steps (i)- (iv) may be repeated at least 2 times, preferably at least 4 times and more preferably at least 8 times. The method may further comprise a shaking waveform before step (i), and/or may further comprise driving the pixel to the color state of the second type of particles after the shaking waveform but prior to step (i). The lengths of the driving periods may be temperature dependent.

**[Para** 77] This driving method not only is particularly effective at a low temperature, but can also provide a display device better tolerance of structural variations caused during manufacture of the display device. Therefore its usefulness is not limited to low temperature driving.

**[Para** 78] Figure 14 illustrates a waveform which may be used to effect the black-to-white (high positive to low negative) transition of Figure 3-3. In the waveform of Figure 14, which is essentially an inverted version of the waveform of Figure 4, a high positive driving voltage (V_{H1}, for example +15V) is first applied for a period of t13. This initial application of a high positive driving voltage may be omitted but is preferably included to ensure that the entire waveform of Figure 14 is DC balanced. A shaking waveform is then applied, followed by application of the high positive driving voltage (V_{H1}) for a period of t14, thus ensuring that the pixel is in the black state shown in Figure 3-3. From this black state, the pixel is driven to the white state by applying a low negative driving voltage (V_{L2}, for example -10V) for a period of t15, to effect the black-to-white transition shown in Figure 3-3. The period t14 is sufficient to drive the pixel to the black state when V_{H1} is applied and the period t15 is sufficient to drive the pixel to the white state from the black state when V_{L2} is applied. The waveform of Figure 14 may be DC balanced.

**[Para** 79] The driving method of Figure 14 therefore can be summarized as follows:
**[Para 80]** A driving method for an electrophoretic display comprising a first surface on the viewing side, a second surface on the non-viewing side and an electrophoretic fluid which fluid is sandwiched between a common electrode and a layer of pixel electrodes and comprises a first type of particles, a second type of particles, a third type of particles, a fourth type of particles and a fifth type of particles, all of which are dispersed in a solvent or solvent mixture, wherein:
(a) the five types of pigment particles have optical characteristics differing from one another;
(b) the first and second types of particles carry opposite charge polarities;
(c) the third and fourth types of particles carry the same charge polarity as the first type of particles, and the first type, the third type and the fourth type of particles have progressively lower magnitudes; and
(d) the fifth type of particles carries the same charge polarity as the second type of particles but its magnitude is lower than that of the second type of particles,
the method comprises the following steps:
(i) driving a pixel of the electrophoretic display to the color of the first type of particles; and
(ii) applying a low driving voltage for a period of time, wherein the low driving voltage has the same polarity as the fifth type of particles and the period of time is sufficient to drive the pixel from the color state of the first type of particles to the color state of the fifth type of particles to appear at the viewing side.

**[Para 81]** Figure 15 illustrates a waveform which may be used to replace the portion of the waveform of Figure 14 occurring in period t15. In the first portion of the waveform of Figure 14, which is essentially an inverted version of the waveform of Figure 5, the high positive driving voltage (V_{H1}) is applied to a pixel for a period of t16 to drive the pixel towards the black state, then a negative driving voltage (-V') is applied for a period of t17 to drive the pixel towards the white state. The magnitude of -V' is lower than that of V_{H} (e.g., V_{H1} or V_{H2}) The magnitude of -V' may be less than 50% of the magnitude of V_{H}, and t17 may greater than t16, for example, t16 may be in the range of 20-400 msec and t17 may be ≥ 200 msec. The waveform of Figure 15 is repeated for at least 2 cycles (N≥ 2), preferably at least 4 cycles and more preferably at least 8 cycles. The white color becomes more intense after each driving cycle.

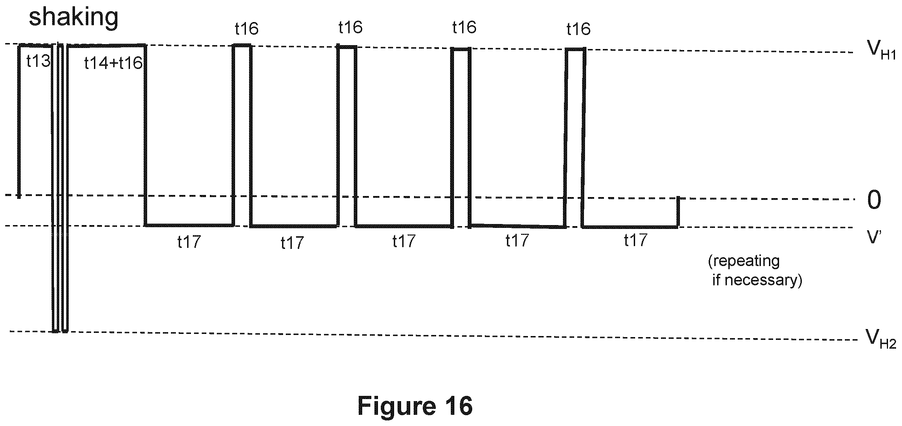

**[Para 82]** As already noted, the waveform of Figure 15 may be used to replace the portion of the waveform of Figure 14 occurring in period t15. Figure 16 illustrates a waveform in which the portion of the waveform of Figure 14 occurring in period t15 is replaced by four cycles of the waveform of Figure 15 (more or fewer cycles may of course be used). In other words, the waveform of Figure 16 comprises driving towards black for a period of t13 (cf. Figure 14), a shaking waveform, driving towards black for a period of t14 (again, cf. Figure 14), and then applying multiple cycles of the waveform of Figure 15.

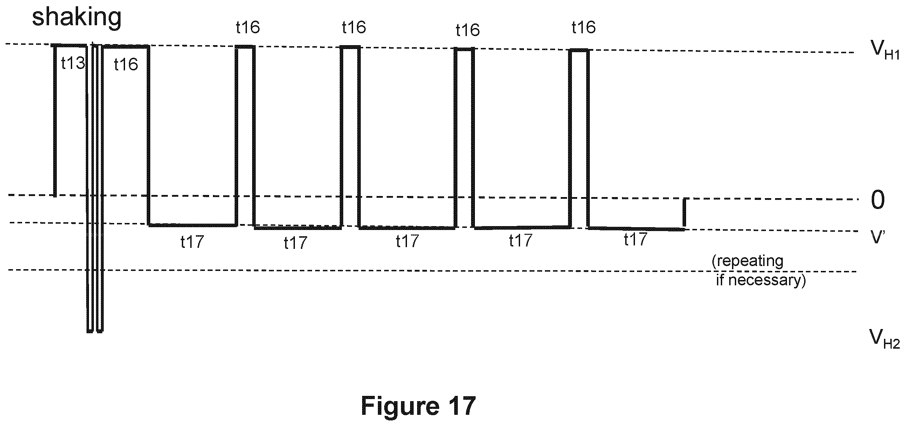

**[Para 83]** Figure 17 illustrates a waveform similar to that of Figure 16 but in which the step of driving towards the black state for the period of t14 is eliminated, so that the waveform of Figure 17 transitions from the shaking waveform immediately to the waveform of Figure 15. The waveforms of Figures 16 and 17 may each be DC balanced.

**[Para 84]** The driving method of Figure 15 therefore can be summarized as follows:
**[Para 85]** A driving method for an electrophoretic display comprising a first surface on the viewing side, a second surface on the non-viewing side and an electrophoretic fluid which fluid is sandwiched between a common electrode and a layer of pixel electrodes and comprises a first type of particles, a second type of particles, a third type of particles, a fourth type of particles and a fifth type of particles, all of which are dispersed in a solvent or solvent mixture, wherein:
(a) the five types of pigment particles have optical characteristics differing from one another;
(b) the first and second types of particles carry opposite charge polarities;
(c) the third and fourth types of particles carry the same charge polarity as the first type of particles, and the first type, the third type and the fourth type of particles have progressively lower magnitudes; and
(d) the fifth type of particles carries the same charge polarity as the second type of particles but its magnitude is lower than that of the second type of particles,
the method comprises the following steps:
(i) applying a first driving voltage to a pixel of the electrophoretic display for a first period of time to drive the pixel towards the color state of the first type of particles;
(ii) applying a second driving voltage to the pixel for a second period of time, wherein the second driving voltage has same polarity as the fifth type of particles and a magnitude lower than that of the first driving voltage, to drive the pixel from the color state of the first type of particles towards the color state of the fifth type of particles to appear at the viewing side; and repeating steps (i) and (ii).

**[Para 86]** In this method, the magnitude of the second driving voltage may be less than 50% of the magnitude of the first driving voltage. Steps (i) and (ii) may be repeated at least 2 times, preferably at least 4 times and more preferably at least 8 times. The method may further comprise a shaking waveform before step (i), and/or may further comprise driving the pixel to the color state of the first type of particles after the shaking waveform but prior to step (i). The lengths of the driving periods may be temperature dependent.

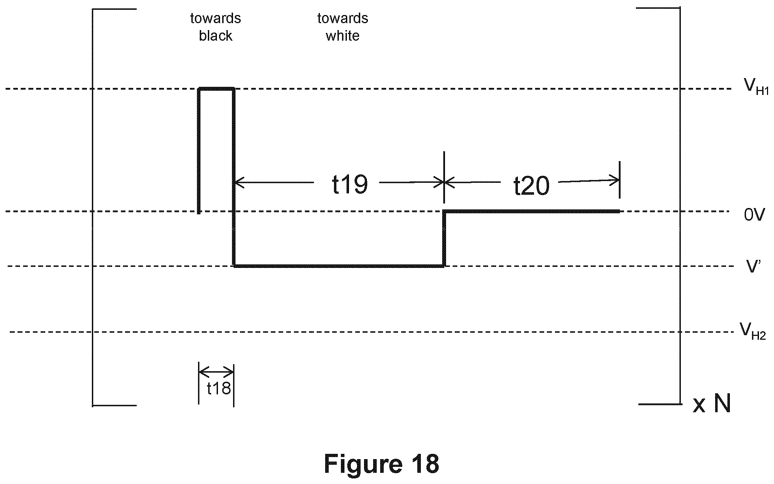

**[Para** 87] Figure 18 illustrates a waveform which may be used in place of the waveform of Figure 15 to replace the portion of the waveform of Figure 14 occurring in period t15. The waveform of Figure 8, which is essentially an inverted version of the waveform of Figure 8, comprises driving towards black for an initial period of t18 (cf. period t16 in Figure 15), followed by driving towards white for a period of t19 (cf. period t17 in Figure 15). However, in the waveform of Figure 18, period t19 is followed by a wait period of t20 in which no driving voltage is applied. Like the waveform of Figure 8, the waveform of Figure 18 is designed to release the charge imbalance stored in the dielectric layers and/or at the interfaces between layers of different materials, in an electrophoretic display device, especially when the resistance of the dielectric layers is high, for example, at a low temperature. The wait time presumably can dissipate the unwanted charge stored in the dielectric layers and cause the short pulse t18 for driving a pixel towards the black state and the longer pulse t19 for driving the pixel towards the white state to be more efficient. The wait period t20 may be in the range of 5-5000 msec, depending on the resistance of the dielectric layers. The entire waveform of Figure 8 may be repeated at least 2 times (N ≥2), preferably at least 4 times and more preferably at least 8 times. The periods, t18 and t19 in Figure 18, are similar to periods t16 and t17 in Figure 15, respectively. In other words, t19 is greater than t18.

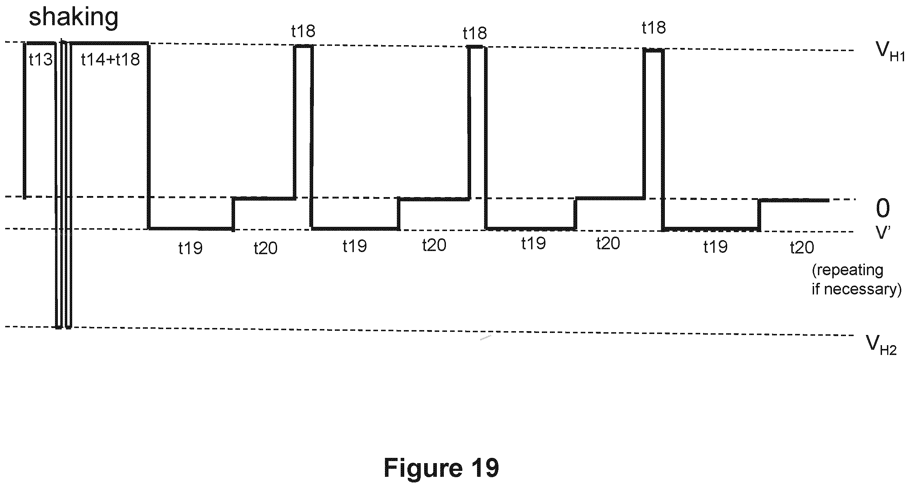

**[Para 88]** As already noted, the waveform of Figure 18 may be used to replace the portion of the waveform of Figure 14 occurring in period t15. Figure 19 illustrates a waveform in which the portion of the waveform of Figure 14 occurring in period t15 is replaced by three cycles of the waveform of Figure 18 (more or fewer cycles may of course be used). In other words, the waveform of Figure 19 comprises driving towards black for a period of t13 (cf. Figure 14), a shaking waveform, driving towards black for a period of t14 (again, cf. Figure 14), and then applying multiple cycles of the waveform of Figure 18.

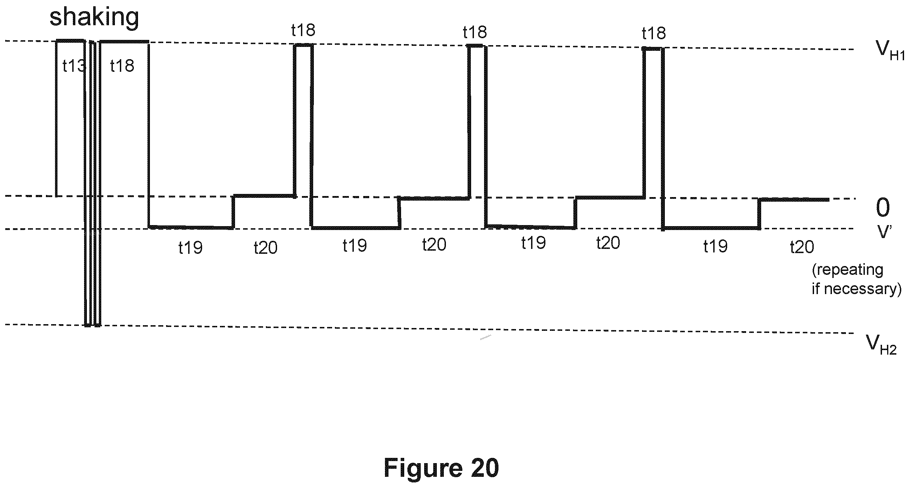

**[Para 89]** Figure 20 illustrates a waveform similar to that of Figure 19 but in which the step of driving towards the black state for the period of t14 is eliminated, so that the waveform of Figure 20 transitions from the shaking waveform immediately to the waveform of Figure 18. The waveforms of Figures 19 and 20 may each be DC balanced.

**[Para 90]** The driving method of Figure 18 therefore can be summarized as follows:
**[Para 91]** A driving method for an electrophoretic display comprising a first surface on the viewing side, a second surface on the non-viewing side and an electrophoretic fluid which fluid is sandwiched between a common electrode and a layer of pixel electrodes and comprises a first type of particles, a second type of particles, a third type of particles, a fourth type of particles and a fifth type of particles, all of which are dispersed in a solvent or solvent mixture, wherein:
(a) the five types of pigment particles have optical characteristics differing from one another;
(b) the first and second types of particles carry opposite charge polarities;
(c) the third and fourth types of particles carry the same charge polarity as the first type of particles, and the first type, the third type and the fourth type of particles have progressively lower magnitudes; and
(d) the fifth type of particles carries the same charge polarity as the second type of particles but its magnitude is lower than that of the second type of particles,
the method comprises the following steps:
(i) applying a first driving voltage to a pixel of the electrophoretic display for a first period of time to drive the pixel towards the color state of the first type of particles;
(ii) applying a second driving voltage to the pixel for a second period of time, wherein the second driving voltage has same polarity as the fifth type of particles and a magnitude lower than that of the first driving voltage, to drive the pixel from the color state of the first type of particles towards the color state of the fifth type of particles to appear at the viewing side;
(iii) applying no driving voltage to the pixel for a third period of time; and repeating steps (i)-(iii).

**[Para 92]** In this method, the magnitude of the second driving voltage may be less than 50% of the magnitude of the first driving voltage. Steps (i), (ii) and (iii) may be repeated at least 2 times, preferably at least 4 times and more preferably at least 8 times. The method may further comprise a shaking waveform before step (i), and/or may further comprise driving the pixel to the color state of the first type of particles after the shaking waveform but prior to step (i). The lengths of the driving periods may be temperature dependent.

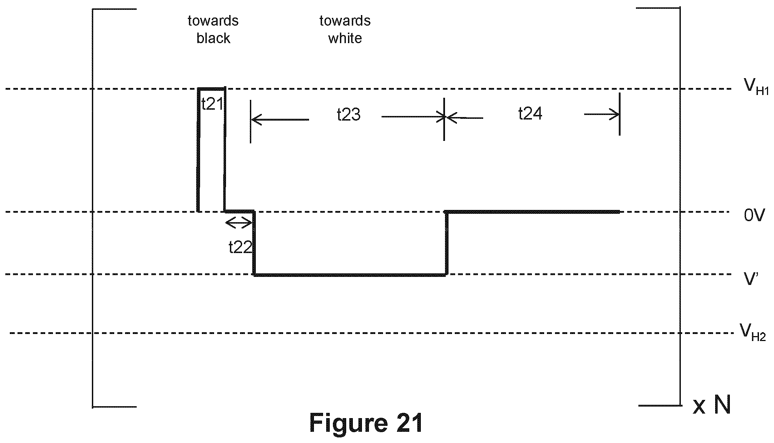

**[Para 93]** Figure 21 illustrates a waveform which may be used in place of the waveform of Figure 15 or 18 to replace the portion of the waveform of Figure 14 occurring in period t15. The waveform of Figure 21, which is essentially an inverted version of the waveform of Figure 11, comprises driving towards black for an initial period of t21 (cf. period t16 in Figure 15), followed by a wait time of t22 during which no driving voltage is applied. The wait time of t22 is followed by driving towards white for a period of t23 (cf. period t17 in Figure 15), followed by a wait period of t24 in which no driving voltage is applied (cf. period t20 in Figure 18). The waveform of Figure 21 may be repeated at least 2 times, preferably at least 4 times and more preferably at least 8 times.

**[Para 94]** In the waveform of Figure 21, the first wait time t22 is very short while the second wait time t24 is longer. The period t21 is also shorter than the period t23. For example, t21 may be in the range of 20-200 msec; t22 may be less than 100 msec; t23 may be in the range of 100-200 msec; and t24 may be less than 1000 msec.

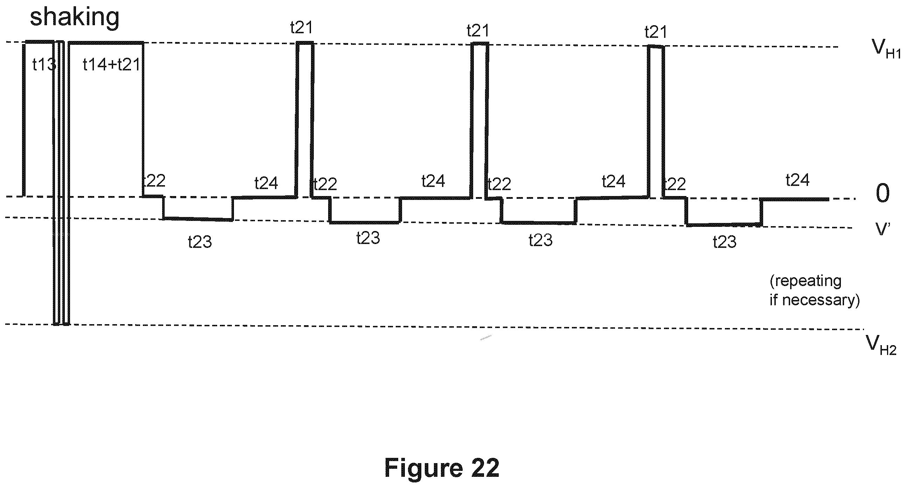

**[Para 95]** As already noted, the waveform of Figure 21 may be used to replace the portion of the waveform of Figure 14 occurring in period t15. Figure 22 illustrates a waveform in which the portion of the waveform of Figure 14 occurring in period t15 is replaced by three cycles of the waveform of Figure 21 (more or fewer cycles may of course be used). In other words, the waveform of Figure 22 comprises driving towards black for a period of t13 (cf. Figure 14), a shaking waveform, driving towards black for a period of t14 (again, cf. Figure 14), and then applying multiple cycles of the waveform of Figure 21. As a general rule, the better the black state achieved at the end of period t14, the better the white state that will be displayed at the end of the waveform.

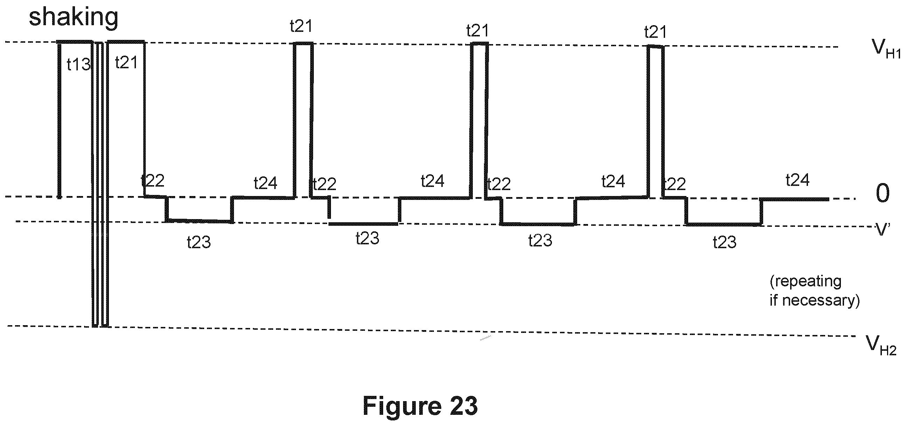

**[Para 96]** Figure 23 illustrates a waveform similar to that of Figure 22 but in which the step of driving towards the black state for the period of t14 is eliminated, so that the waveform of Figure 23 transitions from the shaking waveform immediately to the waveform of Figure 21. The waveforms of Figures 22 and 23 may each be DC balanced.

**[Para** 97] The driving method of Figure 21 therefore can be summarized as follows:
**[Para 98]** A driving method for an electrophoretic display comprising a first surface on the viewing side, a second surface on the non-viewing side and an electrophoretic fluid which fluid is sandwiched between a common electrode and a layer of pixel electrodes and comprises a first type of particles, a second type of particles, a third type of particles, a fourth type of particles and a fifth type of particles, all of which are dispersed in a solvent or solvent mixture, wherein:
(a) the five types of pigment particles have optical characteristics differing from one another;
(b) the first and second types of particles carry opposite charge polarities;
(c) the third and fourth types of particles carry the same charge polarity as the first type of particles, and the first type, the third type and the fourth type of particles have progressively lower magnitudes; and
(d) the fifth type of particles carries the same charge polarity as the second type of particles but its magnitude is lower than that of the second type of particles,
the method comprises the following steps:
(i) applying a first driving voltage to a pixel in the electrophoretic display for a first period of time to drive the pixel towards the color state of the first type of particles;
(ii) applying no driving voltage to the pixel for a second period of time;
(iii) applying a second driving voltage to the pixel for a third period of time, wherein the second driving voltage has the same polarity as the fifth type of particles and has a magnitude lower than that of the first driving voltage, to drive the pixel from the color state of the first type of particles towards the color state of the fifth type of particles to appear at the viewing side;
(iv) applying no driving voltage to the pixel for a fourth period of time; and repeating steps (i)-(iv).

**[Para 99]** In this method, the magnitude of the second driving voltage may be less than 50% of the magnitude of the first driving voltage. Steps (i)-(iv) may be repeated at least 2 times, preferably at least 4 times and more preferably at least 8 times. The method may further comprise a shaking waveform before step (i), and/or may further comprise driving the pixel to the color state of the first type of particles after the shaking waveform but prior to step (i). The lengths of the driving periods may be temperature dependent.

**[Para** 100] This driving method not only is particularly effective at a low temperature, but can also provide a display device better tolerance of structural variations caused during manufacture of the display device. Therefore its usefulness is not limited to low temperature driving.

**[Para 101]** Figure 24 illustrates a waveform which may be used to effect the white-to-blue (low negative to middle positive) transition of Figure 3-4 or 3-5. The waveform of Figure 24 is a "single pulse" waveform comprising a low negative driving voltage (V_{L2}, for example -3V) to drive the pixel to the white state shown on the left hand side of Figure 3-4 or 3-5, followed by a medium positive driving voltage V_{M1}, for example +12V). The single pulse waveform shown in Figure 24 can lead to a blue color state, with proper timing. The driving time for the single blue-going pulse may be in the range of about 100 to about 2,000 msec. If the pulse is applied for too long, the red particles may catch up with the blue particles adjacent the viewing surface of the display, which may cause some red contamination of the blue state.

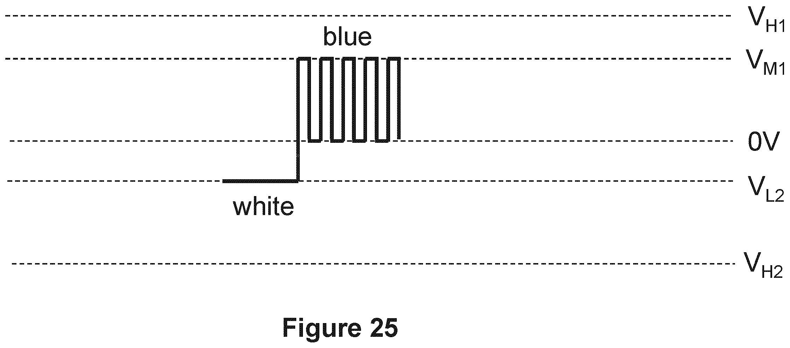

[Para 102] Alternatively, the white-to-blue transition of Figure 3-4 or 3-5 may be effected using a pulsing waveform as shown in Figure 25. The waveform of Figure 25 begins with the same white-going pulse as the waveform of Figure 24 but instead of the single blue-going pulse in the waveform of Figure 24, the waveform of Figure 25 has a series of short driving pulses of the medium positive driving voltage V_{M1}, alternating with periods of zero voltage. The medium positive driving voltage used in the waveform of Figure 25 has a magnitude which may or may not be the same as that of the medium positive driving voltage used in the single pulse waveform of Figure 24. In a waveform such as that of Figure 25, there may be 10-200 cycles of pulsing. A pulsing waveform may lead to better color performance because it can prevent self-aggregation of the blue particles, which usually causes reduction of the hiding power of layers of such particles.

[Para 103]As already noted, the five particle system shown in Figures 1 and 3-1 to 3-5, has high, middle and low positive particles, and high and low negative particles. If the middle positive particles were replaced with middle negative particles, the color state of these middle negative particles could be displayed by a transition from the color state of the low positive particles using waveforms which are inverted versions of those shown in Figures 24 and 25.

[Para 104] The driving method for achieving the (blue) color state of the middle positive particles in the five particle system shown in Figures 1 and 3-4 to 3-5 may be summarized as follows:
[Para 105]A driving method for an electrophoretic display comprising a first surface on the viewing side, a second surface on the non-viewing side and an electrophoretic fluid which fluid is sandwiched between a common electrode and a layer of pixel electrodes and comprises a first type of particles, a second type of particles, a third type of particles, a fourth type of particles and a fifth type of, all of which are dispersed in a solvent or solvent mixture, wherein:
(a) the five types of pigment particles have optical characteristics differing from one another;
(b) the first and second types of particles carry opposite charge polarities;
(c) the third and fourth types of particles carry the same charge polarity as the first type of particles and the first type, the third type and the fourth type have progressively lower magnitudes; and
(d) the fifth type of particles carries the same charge polarity as the second type of particles but their magnitude is lower than that of the second type of particles,
the method comprises applying a driving voltage or a pulsing waveform with alternating a driving voltage and no driving voltage, to a pixel of the electrophoretic display, wherein the pixel is in the color state of the fifth type of particles and the driving voltage has the same polarity as the third type of particles, to drive the pixel from the color state of the fifth type of particles towards the color state of the third type of particles to appear at the viewing side.

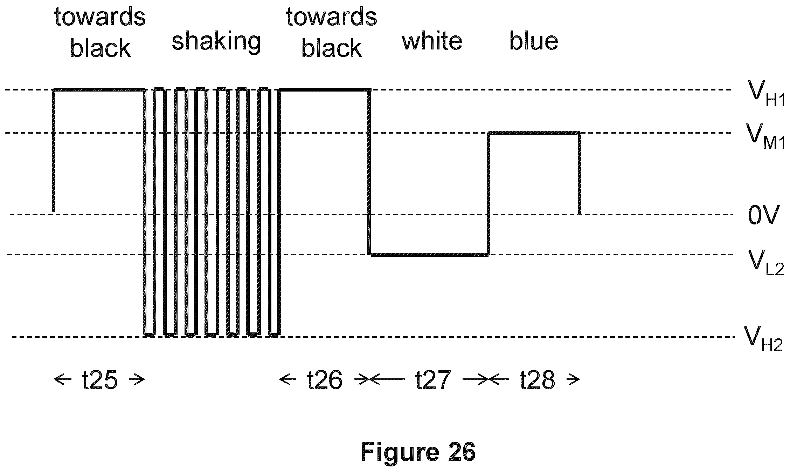

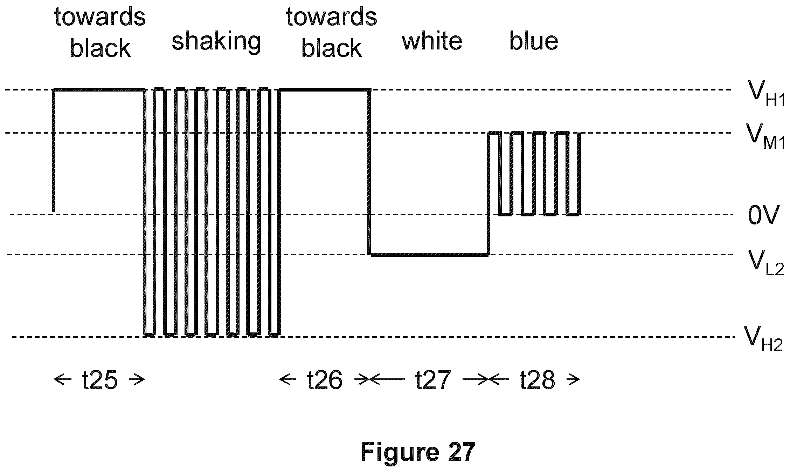

**[Para** 106] The white state needed for the white-to-blue transition of Figure 3-4 or 3-5 can be achieved by any of the methods described above, and Figures 26 and 27 illustrate two possible waveforms for this purpose. The waveform of Figure 26 is in effect a combination of the waveforms of Figures 14 and 24, while the waveform of Figure 27 is in effect a combination of the waveforms of Figures 14 and 25.

**[Para** 107]The waveforms described above make use of three levels of positive driving voltage, high positive (V_{H1}), medium positive (V_{M1}) and low positive (V_{L1}), and two levels of negative driving voltage, high negative (V_{H2}) and low negative (V_{L2}). The medium positive driving voltage (V_{M1}) may be 40% to 100%, preferably 50% to 90%, of the high positive driving voltage (V_{H1}) and the low positive driving voltage (V_{L1}) may be 5% to 50%, preferably 15% to 40%, of the high positive driving voltage (V_{H1}). The low negative driving voltage (V_{L2}) may be 10% to 90%, preferably 30% to 70%, of the high negative driving voltage (V_{H2}).

**[Para** 108]If the middle positive particles were replaced with middle negative particles, three levels of negative driving voltage, high negative, medium negative and low negative, and two levels of positive driving voltage, high positive and low positive would be required. In such a case, the medium negative driving voltage (V_{M2}) may be 40% to 100%, preferably 40% to 90%, of the high negative driving voltage (V_{H2}) and the low negative driving voltage (V_{L2}) may be 5% to 50%, preferably 10% to 45%, of the high negative driving voltage (V_{H2}). The low positive driving voltage (V_{L1}) may be 5% to 95%, preferably 25% to 75%, of high positive driving voltage (V_{H1}).

**[Para 109]** The "high" driving voltage (positive or negative) referred to above is usually the driving voltage required to drive a pixel from a color state of one type of the high charged particles to a color state of another type of high charged particles of opposite polarity. For example, in the system shown in Figures 1 and 3-1 to 3-5, a high driving voltage (V_{H1} or V_{H2}) is defined as a driving voltage which is sufficient to drive a pixel from the black color state to the yellow color state, or *vice versa* (see Figure 3-1).

**[Para** 110] In all embodiments of the present invention, since the five color states are controlled by varying voltage levels and each particle type/color can occupy 100% of the pixel area at a particular driving voltage, the brightness of each individual color state is not compromised. This type of full color electrophoretic display will provide not only non-compromised white and black states, but also non-compromised color states of other colors, such as red, green and blue.

**[Para 111]** In the specific systems described above, each pixel can display five color states, so that the system is a 5-CP system. More color states may be displayed if a pixel consists of multiple sub-pixels each capable of displaying five color states. For example, if each pixel has three sub-pixels, one of the five color states may be displayed by the pixel if all three sub-pixels display that color. If the three sub-pixels display red, blue and black color states respectively, the pixel will display a magenta color state. If the three sub-pixels display green, blue and black color states respectively, the pixel will display a cyan color state. If the three sub-pixels display red, green and black color states respectively, the pixel will display a yellow color state. More color states may be displayed through adjusting driving waveforms or by using various image processing techniques.

**[Para 112]** The electrophoretic medium used in the present invention may be unencapsulated, microencapsulated, a polymer-dispersed electrophoretic medium or in microcells or other display cells, for example as described in US Patent No. 6,930,818, or in microchannels or equivalents, regardless of their shapes or sizes.

**[Para** 113]Electrophoretic layers of the present invention using six different types of particles (6-CP systems), and driving methods for such electrophoretic layers, will now be described. Such layers differ from the five particle systems previously described in that they have three positive and three negative types of particles, and thus contain both middle positive and middle negative particles.

**[Para** 114]Figure 28 is a schematic cross-section similar to that of Figure 1, but taken through a display layer containing six different types of particles (designated respectively by numbers 1-6 within circles) which can display six different color states. In addition to the high positive black, middle positive blue, low positive red, high negative yellow and low positive white of the electrophoretic layer shown in Figure 1, the electrophoretic layer of Figure 28 contains middle negative green (G) particles.

**[Para** 115]Figures 29-1 to 29-5 are schematic cross-sections similar to those of Figures 3-1 to 3-5 respectively and illustrating the same transitions. The driving voltages and the positions of the black, yellow, blue, red and white particles in Figures 29-1 to 29-5 are essentially identical to those in Figures 3-1 to 3-5 respectively; the positions of the green particles are as follows:
(a) in the yellow state shown in Figure 29-1, the green particles lie between the yellow and white particles adjacent the common electrode;
(b) in the black state shown in Figure 29-1, the green particles lie between the yellow and white particles adjacent the pixel electrode;
(c) in the black state shown in Figure 29-2, the green particles are admixed with the yellow, black and blue particles in the pack intermediate the pixel and common electrodes;
(c) in the white state shown in Figure 29-3, the green particles are again admixed with the yellow, black and blue particles in the pack intermediate the pixel and common electrodes;
(d) in the blue state shown in Figure 29-4, the green particles lie between the pixel electrode and the white particles (so that a green color is displayed at the pixel electrode, if visible); and
(e) in the blue state shown in Figure 29-5, the green particles are admixed with the yellow, black and white particles in the pack intermediate the pixel and common electrodes (so that a mixture of colors of these four particles would be displayed at the pixel electrode, if visible).

**[Para** 116] In Figure 29-4, depending upon the charges on the white and green particles and the specific driving voltage used, it is possible that only the white particles escape from the pack and that the green particles remain with the black and yellow particles, so that a white color is displayed at the pixel electrode, if visible. For reasons already discussed, whether the pixel electrode surface displays a green or a white color will normally be of little practical consequence.

**[Para** 117]Figures 29-6 and 29-7 illustrate the manner in which the middle negative (green) particles are displayed at the viewing surface of the display shown in Figure 28. By comparing Figures 29-6 and 29-7 with Figures 29-4 and 29-5 respectively, it will be seen that the method for displaying the middle negative (green) particles is essentially the inverse of that used to display the middle positive (blue) particles. Thus, instead of starting from the color of the low negative (white) particles, the process for displaying the green particles starts from the low positive (red) state 3(c) shown in Figure 29-2 and repeated on the left sides of Figures 29-6 and 29-7. In Figure 29-6, a medium negative voltage (V_{M2}, e.g., -10V) is applied to the pixel electrode (i.e., the common electrode is made moderately positive with respect to the pixel electrode). The medium negative driving voltage causes the white particles to move away from the pixel electrode and the red particles to move away from the common electrode, thereby tending to cause all six types of particles to meet and form a "pack" intermediate the common and pixel electrodes. The medium voltage applied is not sufficient to separate the high positive black from the high negative yellow particles in the pack, but (unlike the situation with the low driving voltage used in Figure 29-2) is sufficient to cause the middle negative green particles to break away from the pack and move towards the common electrode. The low negative white particles also separate from the high positive black particles and move towards the common electrode. However, the middle negative green particles move faster than the low negative white particles and arrive adjacent the common electrode first, so that the pixel displays a green color at the viewing surface. Similarly, both the low positive red particles and the middle positive blue particles separate from the high negative yellow particles and move adjacent the pixel electrode, to produce the state illustrated at 3(f) in Figure 29-6. The middle positive blue particles will normally move faster than the low positive red particles, so that a blue color will be displayed at the pixel electrode, if visible.

**[Para** 118]Figure 29-7 shows an alternative method of effecting the same red-to-green transition as in Figure 29-6. The difference between Figures 29-6 and 29-7 is that in the latter the medium negative driving voltage is reduced from -10 to -8V, with the result that, although the green and white particles separate from the pack in the same way as in Figure 29-6, the electric field generated by the driving voltage of -8V is not sufficient to separate the low positive red particles or the middle positive blue particles from the high negative yellow particles, so that the black, yellow, red and blue particles remain in a pack intermediate the common and pixel electrodes. A green color is still displayed at the viewing surface but the pixel electrode surface (if visible) will display the color of a mixture of black, yellow, red and blue particles, rather than the blue state displayed at this surface in Figure 29-6. For most practical purposes, this difference is of no consequence.

**[Para 119]** Scenarios of the type illustrated in Figures 3-5, 29-5 and 29-7 are possible because the magnitude of the charge on the middle negative green particles need not be the same as that on the middle positive blue particles, and the magnitude of the charge on the low negative white particles need not be the same as that on the low positive red particles. Indeed, there is a third possibility for the red-to-green transition which is not shown in either Figure 29-6 or 29-7. Because the blue particles carry a greater charge than the red particles, it is possible to have a situation which might be regarded as intermediate those shown in Figures 29-6 and 29-7, in which only the red particles escape from the pack, the blue particles remaining within the pack, so that a red color is displayed at the pixel electrode.

**[Para 120]** The transitions illustrated in Figures 29-1 to 29-5 can be effected using appropriate ones of the waveforms illustrated in Figures 4-27 as previously described with reference to Figures 3-1 to 3-5 since the only differences between the transitions of Figures 3-1 to 3-5 on the one hand and Figures 29-1 to 29-5 on the other is the positions of the green particles, which have already been explained. Accordingly, it is now only necessary to discuss waveforms needed for the red-to-green transitions of Figures 29-6 and 29-7, and this will now be done with reference to Figures 30-33.

**[Para** 121]Figure 30 illustrates a waveform which may be used to effect the red-to-green (low positive to middle negative) transition of Figure 29-6 or 29-7. The waveform of Figure 30, which is essentially an inverted version of the waveform of Figure 24, is a "single pulse" waveform comprising a low positive driving voltage (V_{L1}, for example +3V) to drive the pixel to the red state shown on the left hand side of Figure 29-6 or 29-7, followed by a medium negative driving voltage V_{M2}, for example -12V). The single pulse waveform shown in Figure 30 can lead to a green color state, with proper timing. The driving time for the single green-going pulse may be in the range of about 100 to about 2,000 msec. If the pulse is applied for too long, the white particles may catch up with the green particles adjacent the viewing surface of the display, which may cause some reduction is saturation of the green state.

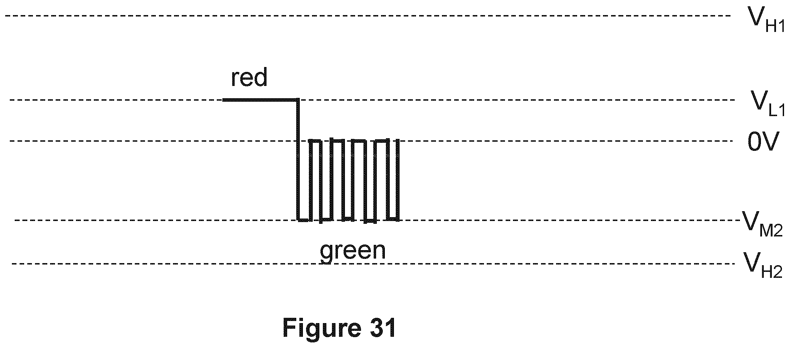

**[Para 122]** Alternatively**,** the red-to-green transition of Figure 29-6 or 29-7 may be effected using a pulsing waveform as shown in Figure 31. The waveform of Figure 31 begins with the same red-going pulse as the waveform of Figure 30 but instead of the single green-going pulse in the waveform of Figure 30, the waveform of Figure 31 has a series of short driving pulses of the medium negative driving voltage V_{M2}, alternating with periods of zero voltage. The medium negative driving voltage used in the waveform of Figure 31 has a magnitude which may or may not be the same as that of the medium negative driving voltage used in the single pulse waveform of Figure 30. In a waveform such as that of Figure 31, there may be 10-200 cycles of pulsing. A pulsing waveform may lead to better color performance because it can prevent self-aggregation of the green particles, which usually causes reduction of the hiding power of layers of such particles.

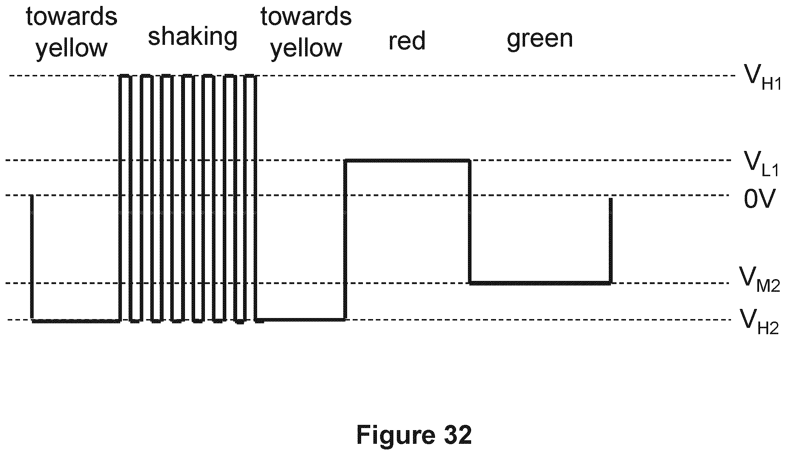

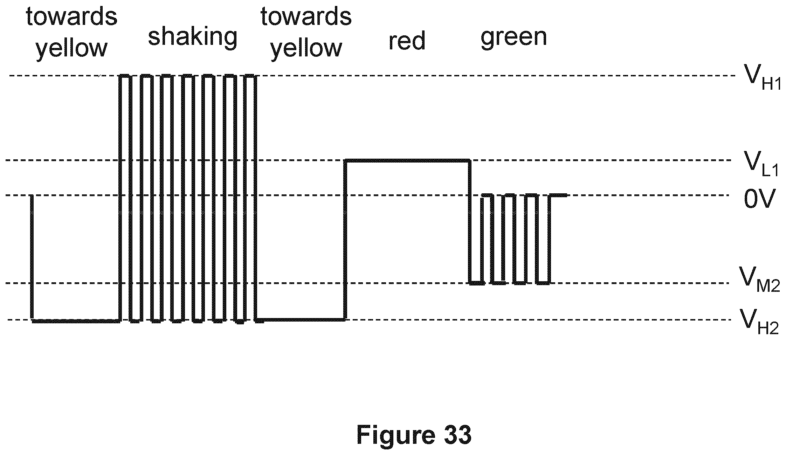

**[Para 123]** The red state needed for the red-to-green transition of Figure 29-6 or 29-7 can be achieved by any of the methods described above, and Figures 32 and 33 illustrate two possible waveforms for this purpose. The waveform of Figure 32 is in effect a combination of the waveforms of Figures 4 and 30, while the waveform of Figure 33 is in effect a combination of the waveforms of Figures 4 and 31.

**[Para** 124]Methods for effecting transitions such as those shown in Figure 29-6 or 29-7 can be summarized as follows:
**[Para 125]A** driving method for an electrophoretic display comprising a first surface on the viewing side, a second surface on the non-viewing side and an electrophoretic fluid which fluid is sandwiched between a common electrode and a layer of pixel electrodes and comprises a first type of particles, a second type of particles, a third type of particles, a fourth type of particles, a fifth type of particles and a sixth type of particles, all of which are dispersed in a solvent or solvent mixture, wherein:
(a) the six types of pigment particles have optical characteristics differing from one another;
(b) the first type, the third type and the fifth type are high positive particles, mid-positive particles and low positive particles, respectively; and
(c) the second type, the fourth type and the sixth type are high negative, mid-negative and low negative particles, respectively,
the method comprises applying a driving voltage or a pulsing waveform with alternating a driving voltage and no driving voltage, to a pixel of the electrophoretic display, wherein the pixel is in the color state of the fifth type of particles and the driving voltage has the same polarity as the fourth type of particles, to drive the pixel from the color state of the fifth type of particles towards the color state of the fourth type of particles to appear at the viewing side.

**[Para** 126] The relationships between the high, medium and low driving voltages, and the forms of electrophoretic layers which may be employed in the present invention have been discussed above with reference to five particle systems, and these relationships and forms apply equally to six particle systems.

**[Para** 127]It will be apparent to those skilled in the art that numerous changes and modifications can be made in the specific embodiments of the invention described above without departing from the scope of the invention as defined in the appended claims. Accordingly, the whole of the foregoing description is to be interpreted in an illustrative and not in a limitative sense.

## Claims

1. A display layer having a first, viewing surface (13) and a second surface (14) on the opposed side of the display layer from the first surface (13), the display layer further comprising an electrophoretic medium comprising a dielectric fluid that is clear and colorless, and first (K), second (Y), third (B), fourth (R), fifth (W) and sixth (G) types of particles dispersed in the fluid, the first (K), second (Y), third (B), fourth (R) and fifth (W) types of particles having respectively first, second, third, fourth, fifth and sixth optical characteristics differing from one another, the first (K), third (B) and fourth (R) types of particles having charges of one polarity and the second (Y), fifth (W) and sixth (G) types of particles having charges of the opposite polarity, the first (K) type of particles having a greater zeta potential or electrophoretic mobility than the third (B) type of particles, the third (B) type of particles having a greater zeta potential or electrophoretic mobility than the fourth (R) type of particles, the second (Y) type of particles having a greater zeta potential or electrophoretic mobility than the sixth (G) type of particles, and the sixth (G) type of particles having a greater zeta potential or electrophoretic mobility than the fifth (W) type of particles,
wherein the display layer comprises means for applying an electric field between the first and second surfaces and the means is arranged to apply, in any order,
(i) a first electric field having a high magnitude and a polarity to drive the first type of particles towards the viewing surface, thereby causing the display layer to display the first optical characteristic at the viewing surface;
(ii) a second electric field having a high magnitude and a polarity to drive the second type of particles towards the viewing surface, thereby causing the display layer to display the second optical characteristic at the viewing surface;
(iii) when the second optical characteristic is displayed at the viewing surface, a third electric field having a low magnitude and a polarity to drive the fourth type of particles towards the viewing surface, thereby causing the display layer to display the fourth optical characteristic at the viewing surface;
(iv) when the first optical characteristic is displayed at the viewing surface, a fourth electric field having a low magnitude and a polarity to drive the fifth type of particles towards the viewing surface, thereby causing the display layer to display the fifth optical characteristic at the viewing surface; and
(v) when the fifth optical characteristic is displayed at the viewing surface, a fifth electric field having a magnitude intermediate the first and third electric fields and a polarity to drive the third type of particles towards the viewing surface, thereby causing the display layer to display the third optical characteristic at the viewing surface, and
(vi) when the fourth optical characteristic is displayed at the viewing surface, a sixth electric field having a magnitude intermediate the second and fourth electric fields and a polarity to drive the sixth type of particles towards the viewing surface, thereby causing the display layer to display the sixth optical characteristic at the viewing surface.

2. The display layer of claim 1 wherein the first to sixth optical characteristics are colors perceptible to the human eye and comprise any combination of white, black, red, green, blue, cyan, magenta and yellow.

3. The display layer of claim 1 wherein the first to sixth optical characteristics are colors perceptible to the human eye and comprise any combination of white, black, red, green, blue and yellow.

4. The display layer of claim 1 wherein the first to sixth particles (K, Y, B, R, W, G) comprise a light-scattering white particle (W), a light-absorbing black particle (K) and the remaining particles are light reflecting.

5. The display layer of claim 1 wherein the fluid and the first to sixth particles (K, Y, B, R, W, G) are microencapsulated, held within a polymer-dispersed electrophoretic medium or held within microcells.

## Patentansprüche

1. Anzeigeschicht mit einer ersten Betrachtungsoberfläche (13) und einer zweiten Oberfläche (14) auf der Seite der Anzeigeschicht, die der ersten Oberfläche (13) gegenüber liegt, wobei die Anzeigeschicht ferner ein elektrophoretisches Medium umfasst, das ein dielektrisches Fluid, das klar und farblos ist, und einen ersten (K), zweiten (Y), dritten (B), vierten (R), fünften (W) und sechsten (G) Typ von Partikeln umfasst, die in dem Fluid dispergiert sind, wobei der erste (K), zweite (Y), dritte (B), vierte (R) und fünfte (W) Typ von Partikeln erste, zweite, dritte, vierte, fünfte bzw. sechste optische Charakteristiken aufweisen, die sich voneinander unterscheiden, wobei der erste (K), dritte (B) und vierte (R) Typ von Partikeln Ladungen einer Polarität aufweisen und der zweite (Y), fünfte (W) und sechste (G) Typ von Partikeln Ladungen der entgegengesetzten Polarität aufweisen, wobei der erste (K) Typ von Partikeln ein größeres Zeta-Potential oder eine größere elektrophoretische Mobilität als der dritte (B) Typ von Partikeln aufweist, der dritte (B) Typ von Partikeln ein größeres Zeta-Potential oder eine größere elektrophoretische Mobilität als der vierte (R) Typ von Partikeln aufweist, der zweite (Y) Typ von Partikeln ein größeres Zeta-Potential oder eine größere elektrophoretische Mobilität als der sechste (G) Typ von Partikeln aufweist und der sechste (G) Typ von Partikeln ein größeres Zeta-Potential oder eine größere elektrophoretische Mobilität als der fünfte (W) Typ von Partikeln aufweist,
wobei die Anzeigeschicht Mittel zum Anlegen eines elektrischen Feldes zwischen der ersten und der zweiten Oberfläche umfasst und das Mittel zum Anlegen, in beliebiger Reihenfolge, von Folgendem eingerichtet ist,
(i) eines ersten elektrischen Feldes mit einem großen Betrag und einer Polarität, um den ersten Typ von Partikeln zu der Betrachtungsoberfläche hin zu treiben, wodurch bewirkt wird, dass die Anzeigeschicht die erste optische Charakteristik an der Betrachtungsoberfläche anzeigt;
(ii) eines zweiten elektrischen Feldes mit einem großen Betrag und einer Polarität, um den zweiten Typ von Partikeln zu der Betrachtungsoberfläche hin zu treiben, wodurch bewirkt wird, dass die Anzeigeschicht die zweite optische Charakteristik an der Betrachtungsoberfläche anzeigt;
(iii) wenn die zweite optische Charakteristik an der Betrachtungsoberfläche angezeigt wird, eines dritten elektrischen Feldes mit einem kleinen Betrag und einer Polarität, um den vierten Typ von Partikeln zu der Betrachtungsoberfläche hin zu treiben, wodurch bewirkt wird, dass die Anzeigeschicht die vierte optische Charakteristik an der Betrachtungsoberfläche anzeigt;
(iv) wenn die erste optische Charakteristik an der Betrachtungsoberfläche angezeigt wird, eines vierten elektrischen Feldes mit einem kleinen Betrag und einer Polarität, um den fünften Typ von Partikeln zu der Betrachtungsoberfläche hin zu treiben, wodurch bewirkt wird, dass die Anzeigeschicht die fünfte optische Charakteristik an der Betrachtungsoberfläche anzeigt; und
(v) wenn die fünfte optische Charakteristik an der Betrachtungsoberfläche angezeigt wird, eines fünften elektrischen Feldes mit einem Betrag zwischen dem ersten und dritten elektrischen Feld und einer Polarität, um den dritten Typ von Partikeln zu der Betrachtungsoberfläche hin zu treiben, wodurch bewirkt wird, dass die Anzeigeschicht die dritte optische Charakteristik an der Betrachtungsoberfläche anzeigt, und
(vi) wenn die vierte optische Charakteristik an der Betrachtungsoberfläche angezeigt wird, eines sechsten elektrischen Feldes mit einem Betrag zwischen dem zweiten und vierten elektrischen Feld und einer Polarität, um den sechsten Typ von Partikeln zu der Betrachtungsoberfläche hin zu treiben, wodurch bewirkt wird, dass die Anzeigeschicht die sechste optische Charakteristik an der Betrachtungsoberfläche anzeigt.

2. Anzeigeschicht nach Anspruch 1, wobei die ersten bis sechsten optischen Eigenschaften Farben sind, die für das menschliche Auge wahrnehmbar sind und eine beliebige Kombination von Weiß, Schwarz, Rot, Grün, Blau, Cyan, Magenta und Gelb umfassen.

3. Anzeigeschicht nach Anspruch 1, wobei die ersten bis sechsten optischen Eigenschaften Farben sind, die für das menschliche Auge wahrnehmbar sind und eine beliebige Kombination von Weiß, Schwarz, Rot, Grün, Blau und Gelb umfassen.

4. Anzeigeschicht nach Anspruch 1, wobei die ersten bis sechsten Partikel (K, Y, B, R, W, G) ein lichtstreuendes weißes Teilchen (W), ein lichtabsorbierendes schwarzes Teilchen (K) umfassen und die restlichen Teilchen lichtreflektierend sind.

5. Anzeigeschicht nach Anspruch 1, wobei das Fluid und die ersten bis sechsten Partikel (K, Y, B, R, W, G) mikroverkapselt, in einem polymerdispergierten elektrophoretischen Medium gehalten oder innerhalb von Mikrozellen gehalten werden.

## Revendications

1. Couche d'affichage ayant une première surface de visualisation (13) et une seconde surface (14) sur le côté opposé de la couche d'affichage par rapport à la première surface (13), la couche d'affichage comprenant en outre un support électrophorétique comprenant un fluide diélectrique qui est clair et incolore, et des premier (K), deuxième (Y), troisième (B), quatrième (R), cinquième (W) et sixième (G) types de particules dispersées dans le fluide, les premier (K), deuxième (Y), troisième (B), quatrième (R) et cinquième (W) types de particules ayant respectivement des première, deuxième, troisième, quatrième, cinquième et sixième caractéristiques optiques différentes les unes des autres, les premier (K), troisième (B) et quatrième (R) types de particules ayant des charges d'une certaine polarité et les deuxième (Y), cinquième (W) et sixième (G) types de particules ayant des polarités opposées, le premier type (K) de particules ayant un potentiel zêta, ou une mobilité électrophorétique, supérieur au troisième type (B) de particules, le troisième type (B) de particules ayant un potentiel zêta, ou une mobilité électrophorétique, supérieur au quatrième type (R) de particules, le deuxième type (Y) de particules ayant un potentiel zêta, ou une mobilité électrophorétique, supérieur au sixième type (G) de particules, et le sixième type (G) de particules présentant un potentiel zêta, ou une mobilité électrophorétique, supérieur au cinquième type (W) de particules,
où la couche d'affichage comprend des moyens d'application d'un champ électrique entre les première et deuxième surfaces, et les moyens sont agencés pour appliquer, dans n'importe quel ordre,
(i) un premier champ électrique ayant une amplitude élevée et une polarité pour entraîner le premier type de particules vers la surface de visualisation, ce qui amène la couche d'affichage à afficher la première caractéristique optique au niveau de la surface de visualisation ;
(ii) un deuxième champ électrique ayant une amplitude élevée et une polarité pour entraîner le deuxième type de particules vers la surface de visualisation, ce qui amène la couche d'affichage à afficher la deuxième caractéristique optique au niveau de la surface de visualisation ;
(iii) lorsque la deuxième caractéristique optique est affichée au niveau de la surface de visualisation, un troisième champ électrique ayant une faible amplitude et une polarité pour entraîner le quatrième type de particules vers la surface de visualisation, ce qui amène la couche d'affichage à afficher la quatrième caractéristique optique au niveau de la surface de visualisation ;
(iv) lorsque la première caractéristique optique est affichée au niveau de la surface de visualisation, un quatrième champ électrique ayant une faible amplitude et une polarité pour entraîner le cinquième type de particules vers la surface de visualisation, ce qui amène la couche d'affichage à afficher la cinquième caractéristique optique au niveau de la surface de visualisation ; et
(v) lorsque la cinquième caractéristique optique est affichée au niveau de la surface de visualisation, un cinquième champ électrique ayant une amplitude intermédiaire entre les premier et troisième champs électriques et une polarité pour entraîner le troisième type de particules vers la surface de visualisation, amenant ainsi la couche d'affichage à afficher la troisième caractéristique optique au niveau de la surface de visualisation, et
(vi) lorsque la quatrième caractéristique optique est affichée au niveau de la surface de visualisation, un sixième champ électrique ayant une amplitude intermédiaire entre les deuxième et quatrième champs électriques et une polarité pour entraîner le sixième type de particules vers la surface de visualisation, amenant ainsi la couche d'affichage à afficher la sixième caractéristique optique au niveau de la surface de visualisation.

2. Couche d'affichage selon la revendication 1, dans laquelle les première à sixième caractéristiques optiques sont des couleurs perceptibles par l'œil humain et comprennent toute combinaison de blanc, noir, rouge, vert, bleu, cyan, magenta et jaune.

3. Couche d'affichage selon la revendication 1, dans laquelle les première à sixième caractéristiques optiques sont des couleurs perceptibles par l'œil humain et comprennent toute combinaison de blanc, noir, rouge, vert, bleu et jaune.

4. Couche d'affichage selon la revendication 1, dans laquelle les première à sixième particules (K, Y, B, R, W, G) comprennent une particule blanche diffusant la lumière (W), une particule noire absorbant la lumière (K) et les particules restantes sont des particules réfléchissant la lumière.

5. Couche d'affichage selon la revendication 1, dans laquelle le fluide et les première à sixième particules (K, Y, B, R, W, G) sont microencapsulés, maintenus dans un milieu électrophorétique dispersé dans un polymère ou contenus dans des microcellules.
